(19) Europäisches Patentamt
European Patent Office
Office européen des brevets

(11)  **EP 4 273 010 B1**

(12)  **EUROPÄISCHE PATENTSCHRIFT**

(45) Veröffentlichungstag und Bekanntmachung des Hinweises auf die Patenterteilung:
**25.06.2025  Patentblatt 2025/26**

(21) Anmeldenummer: **23194281.4**

(22) Anmeldetag: **14.03.2014**

(51) Internationale Patentklassifikation (IPC):
**B60W 30/14** (2006.01)      **B60W 30/095** (2012.01)
**B60W 50/14** (2020.01)

(52) Gemeinsame Patentklassifikation (CPC):
**B60W 30/14; B60W 30/095; B60W 50/14;**
B60W 2552/15; B60W 2552/30; B60W 2552/40;
B60W 2556/65

(54) **FAHRERASSISTENZSYSTEM UND BETRIEBSVERFAHREN FÜR EIN FAHRERASSISTENZSYSTEM ZUR FAHRZEUG-LÄNGSREGELUNG**

DRIVER ASSISTANCE SYSTEM AND METHOD OF OPERATION FOR A DRIVER ASSISTANCE SYSTEM FOR LONGITUDINAL CONTROL OF A VEHICLE

SYSTÈME D'ASSISTANCE DU CONDUCTEUR ET PROCÉDÉ DE FONCTIONNEMENT D'UN SYSTÈME D'ASSISTANCE DU CONDUCTEUR POUR LA RÉGULATION LONGITUDINALE D'UN VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:  **08.08.2013  DE 102013013242**

(43) Veröffentlichungstag der Anmeldung:
**08.11.2023  Patentblatt 2023/45**

(62) Dokumentnummer(n) der früheren Anmeldung(en) nach Art. 76 EPÜ:
**14000937.4 / 2 840 005**

(73) Patentinhaber: **MAN Truck & Bus SE**
**80995 München (DE)**

(72) Erfinder: **Gutzeit, Reinhard**
**82049 Pullach (DE)**

(74) Vertreter: **v. Bezold & Partner Patentanwälte - PartG mbB**
**Ridlerstraße 57**
**80339 München (DE)**

(56) Entgegenhaltungen:
EP-A1- 2 529 993          WO-A1-01/98101
DE-A1- 102010 028 637     DE-A1- 102011 002 275
DE-A1- 19 750 338         US-A1- 2010 256 835
US-A1- 2012 161 980

# EP 4 273 010 B1

**Beschreibung**

Die Erfindung betrifft ein Fahrerassistenzsystem zur Fahrzeug-Längsregelung eines Fahrzeugs bezüglich eines Fremdfahrzeugs, vorzugsweise zur Geschwindigkeits- und/oder Abstandsregelung. Die Erfindung betrifft weiterhin ein Betriebsverfahren für ein Fahrerassistenzsystem zur Fahrzeug-Längsregelung eines Fahrzeugs.

Zum allgemeinen Stand der Technik wird auf die DE 197 50 338 A1 und WO/98101 A1 verwiesen.

Die DE 197 50 338 A1 offenbart ein Fahrregelungssystem mit Sensoreinrichtung und Auswerteeinheit. Die Sensoreinrichtung ermittelt Bewegungs-/Positionsdaten eines Objekts. Die Auswerteeinheit verarbeitet die Bewegungs- und Positionsdaten des Objekts und Eigenbewegungsdaten des Kraftfahrzeugs. Abhängig davon wird die Geschwindigkeit und/oder die Fahrtrichtung des Fahrzeugs geregelt. Eine Tracking-Wahrscheinlichkeit P wird ermittelt, die ein Maß dafür ist, mit welcher regelungsrelevanten Güte das Objekt erfasst worden ist. Geschwindigkeit und/oder Fahrtrichtung des Fahrzeugs wird abhängig von der Tracking-Wahrscheinlichkeit geregelt.

Die WO/98101 A1 offenbart ein Verfahren zur Regelung des Abstandes eines Fahrzeugs zu einem vorausfahrenden Fremdfahrzeug, wobei zur Erhöhung der Fahrsicherheit die Eigengeschwindigkeit des Fahrzeugs und/oder der Sollabstand zu dem direkt vorausfahrenden Fremdfahrzeug als Funktion der Fahrzeuggeschwindigkeit zumindest eines seitlich versetzt fahrenden Fremdfahrzeugs und/oder des Abstandes zwischen mehreren seitlich versetzt fahrenden Fremdfahrzeugen bestimmt werden.

Insbesondere Berufskraftfahrer werden seit mehreren Jahren während der Fahrt mit einer Zunahme von Informationen über den Fahrzeugzustand, die Straßen- und Umgebungsbedingungen und mit Logistikinformationen belastet. Dieser Entwicklung wurde seitens der Fahrzeughersteller durch Einführung von Fahrerassistenzsystemen zur Entlastung des Fahrzeugführers Rechnung getragen. Für den Bereich der Fahrzeug-Längsregelung sind aktiv eingreifende Regelsysteme in Serie gegangen, die sowohl in unkritischen - im Sinne einer Unfallgefahr - Fahrsituationen als auch in kritischen Fahrsituationen wirken.

Ein System zur Längsregelung bei unkritischen Situationen ist beispielsweise der Tempomat mit Beschleunigungsfunktion und Abstandshaltung mit geringer Verzögerungswirkung (max. ca. -0,3 g). Ein Notbremsassistent wirkt andererseits in kritischen Fahrsituationen zur Vermeidung eines Auffahrunfalls mit hoher Verzögerungswirkung (max. ca. -0,8 g).

Solchen aktuellen Seriensystemen mangelt es aber an ausreichender Speisung zeitaktueller Fahrzustands- und Umgebungsinformationen, um eine gleichmäßig gute Wirkung in unterschiedlichen Fahrsituationen gewährleisten zu können. Derartige Systeme sind daher in unzureichender Weise eingerichtet, die Fahrzeuglängsregelung an die im reellen Straßenverkehr auftretenden verschiedensten Verkehrs- und Fahrsituationen anzupassen. Die Abstandsregelung derartiger Systeme wird daher oftmals mit einem zusätzlichen Sicherheitspuffer versehen, der die Fahrzeuge auf einen größeren Abstand als eigentlich notwendig einregelt, um zu verhindern, dass aufgrund von unvorhergesehenen Abweichungen der Annahmen betreffend das Bremsverhalten eine Kollision auftreten kann. Dies führt jedoch zu einer ineffizienten Verkehrsraumausnutzung und zu einer mangelnden Akzeptanz derartiger Systeme, insbesondere beim Einsatz in Nutzfahrzeugen.

Ein manuelles Nachjustieren des jeweiligen Regelsystems seitens des Fahrers kann sicherheitsbedingt nur in zeitunkritischen Situationen erfolgen. Zudem kann die vom Fahrer gewählte Einstellung nicht die der aktuellen Fahrsituation angemessenste Einstellung sein, so dass ein manuelles Nachjustieren fehleranfällig ist.

Eine Aufgabe der Erfindung ist es, ein Fahrerassistenzsystem und ein entsprechendes Betriebsverfahren bereitzustellen, die die Fahrzeug-Längsregelung besser an unterschiedliche Verkehrs- und Fahrsituationen anpassen können, um durch eine situationsangepasste Abstandsregelung die Kollisionsgefahr mit einem Fremdfahrzeug zu reduzieren und gleichzeitig eine effiziente Verkehrsraumausnutzung zu ermöglichen.

Die vorstehend beschriebenen Aufgaben werden erfindungsgemäß gelöst durch ein Betriebsverfahren für ein Fahrerassistenzsystem zur Fahrzeug-Längsregelung nach Anspruch 1, und durch ein Fahrerassistenzsystem zur Fahrzeug-Längsregelung nach Anspruch 11.

Bevorzugte Ausführungsbeispiele der Erfindung werden in den abhängigen Ansprüchen beschrieben.

Bei dem erfindungsgemäßen Betriebsverfahren für ein Fahrerassistenzsystem zur Fahrzeug-Längsregelung eines Fahrzeugs bezüglich eines Fremdfahrzeugs, vorzugsweise zur Geschwindigkeits- und/oder Abstandsregelung, erfolgt die Fahrzeug-Längsregelung in Abhängigkeit eines sich verändernden Einfallswinkels eines sich seitlich oder seitlich von hinten annähernden Fremdfahrzeugs. Auf Basis des sich verändernden Einfallswinkels kann ein Einschervorgang des Fremdfahrzeugs früh erkannt werden und somit ein Kollisionsrisiko bei Einschervorgängen bestimmt werden. Ein besonderer Vorzug der Erfindung liegt somit darin, dass auch seitlich fahrende oder sich von hinten annähernde Fahrzeuge bei der Längsregelung berücksichtigt werden können. Der Einfallswinkel ist der Winkel zwischen der Fahrtrichtung des Fahrzeugs und dem Abstandsvektor zum Fremdfahrzeug. Der Abstandsvektor zum Fremdfahrzeug wird von einem oder mehreren am Fahrzeug angebrachten Erfassungssensor(en) zum nächstliegenden Karosseriebereich des Fremdfahrzeugs bestimmt. Für eine exakte Abstandsbestimmung im Nahbereich ist die fahrzeugeigene Kontur einzuberechnen.

Gemäß der Erfindung umfasst das Betriebsverfahren weiter das Ermitteln einer Bahnkurve des Fremdfahrzeugs in Abhängigkeit eines gemessenen Abstands und des sich verändernden Einfallswinkels des Fremdfahrzeugs und das Ermitteln einer Bahnkurve des eigenen Fahrzeugs. In Abhängigkeit der ermittelten Bahnkurven kann dann bestimmt werden, ob eine Zeitdauer oder ein Abstand bis zu einer möglichen seitlichen Kollision oder Auffahrkollision zwischen dem Fahrzeug und dem Fremdfahrzeug einen vorbestimmten Schwellwert unterschritten hat. Auf Basis der ermittelten Bahnkurve kann somit bestimmt werden, ob und wie unmittelbar ein Kollisionsrisiko durch einen Einschervorgang besteht.

Gemäß der Erfindung wird, falls die Zeitdauer oder der Abstand den vorbestimmten Schwellwert unterschritten hat und/oder falls der seitliche Einfallswinkel in einem vorbestimmten Bereich liegt, ein Warnsignal an den Fahrer ausgegeben, um diesen zu warnen. Anschließend bestimmt das Betriebsverfahren, ob der Fahrer während einer Reaktionsphase ein Ausweichmanöver ausführt. Falls der Fahrer während der Reaktionsphase jedoch kein Ausweichmanöver ausführt oder zumindest kein Ausweichmanöver, das ausreicht, um die unmittelbare Gefahr einer Kollision zu beseitigen, erfolgt ein Ausführen der Fahrzeug-Längsregelung bis ein Sicherheitsabstand zum Fremdfahrzeug erreicht ist.

Derartige Gefahrensituationen können durch eine Querregelung des Fahrers in der Regel am besten gelöst werden, so dass vor Eingriff der Längsregelung dem Fahrer vorteilhafterweise eine Reaktionszeit und damit die Möglichkeit eingeräumt wird, lenkend auszuweichen, abzubremsen oder auf andere Weise die Gefahrensituation aufzulösen. Vorzugsweise wird die Länge der Reaktionsphase für den Fahrer in Abhängigkeit der bestimmten Zeitdauer oder des bestimmten Abstands bis zu einer möglichen seitlichen Kollision bestimmt, so dass die Reaktionszeit variabel an die verfügbare Zeit angepasst werden kann, bis zu der spätestens ein systemseitiger, automatischer Eingriff zur Längsregelung erfolgen muss.

Ein Ausweichmanöver des Fahrers kann beispielsweise daran erkannt wird, ob der Fahrer einen Lenkvorgang, einen Bremsvorgang, eine Geschwindigkeitsänderung und/oder eine Änderung des Fahrpedals ausführt. Ein Lenkvorgang eines Ausweichmanövers kann insbesondere daran erkannt werden, dass die Geschwindigkeit der Änderung des Lenkwinkels größer als ein vorbestimmter Schwellwert ist. Ein für ein Ausweichmanöver typischer Bremsvorgang kann dadurch bestimmt werden, dass die Geschwindigkeit einer Änderung des Bremsdrucks einen vorbestimmten Schwellwert überschreitet. Alternativ kann ein Bremsvorgang auch über eine Betätigung des Bremspedals oder einer anderen Bremseinrichtung erfasst werden. Ein Gangwechsel oder eine Änderung der Winkelposition der Motorregeleinrichtung (z.B. Gaspedal) mit einer Gaspedalgeschwindigkeit > +/- x Grad/s sind weitere mögliche Beispiele, wie ein Ausweichmanöver des Fahrers erkannt werden kann.

Gemäß der Erfindung umfasst das Betriebsverfahren das Berechnen einer Relativgeschwindigkeit des sich seitlich oder seitlich von hinten annähernden Fremdfahrzeugs aus einer zeitlichen Änderung eines Abstandes zwischen Fahrzeug und Fremdfahrzeug und einer Änderung des Einfallswinkels. Hierbei wird die Fahrzeug-Längsregelung, nachdem der Fahrer während der Reaktionsphase kein Ausweichmanöver ausgeführt hat, nur ausgeführt, falls die Relativgeschwindigkeit einen vorbestimmten Schwellschwert unterschreitet.

Das Auffahrrisiko bei seitlichen Einschervorgängen nimmt mit zunehmender Relativgeschwindigkeit, d.h. je schneller das Fremdfahrzeug im Vergleich zum eigenen Fahrzeug ist, stark ab, da dann ein Auffahren des Fahrzeugs auf das eingescherte, jedoch schnellere Fremdfahrzeug unwahrscheinlich ist. Diese Regelungsvariante hat daher den Vorteil, dass unnötige Reglereingriffe vermieden werden.

Gemäß einer weiteren Variante kann bestimmt werden, ob eine ausreichende Lücke zum nächsten vorausfahrenden Fahrzeug in der eigenen Fahrspur vorhanden ist, die einen Einschervorgang eines seitlich fahrenden Fremdfahrzeugs ermöglichen würde. Vorzugsweise wird ein Reglereingriff zur Längsregelung nur dann vorgenommen, wenn bestimmt wurde, dass eine ausreichende Lücke zum Einscheren vorhanden ist. Diese Regelungsvariante hat ebenfalls den Vorteil, dass unnötige Reglereingriffe vermieden werden, da ein plötzlicher Einschervorgang eines Fremdfahrzeugs in der Regel nur dann zu erwarten ist, wenn eine ausreichende Lücke zum Einscheren vorhanden ist.

Insbesondere kann das Betriebsverfahren so ausgebildet sein, dass eine Längsregelung nur dann durchgeführt werden, wenn sich die ermittelten voraussichtlichen Bahnkurven des eigenen Fahrzeugs und des Fremdfahrzeugs in der eigenen Fahrspur innerhalb des Lückenabstandes zum nächsten vorausfahrenden Fahrzeug kreuzen.

Es ist besonders vorteilhaft, wenn zusätzlich zumindest ein aktueller Parameter betreffend einen Fahrbahnzustand, insbesondere einen Zustand der Fahrbahnoberfläche oder des Fahrbahnbelags, einen Fahrbahnreibwert, eine Fahrzeugklasse des Fremdfahrzeugs, einen Fahrzeugbeladungszustand, einen Zustand der Fahrzeugbremsanlage und/oder eines reifenspezifischen Parameters des Fahrzeugs ermittelt wird, und wobei zumindest einer dieser Parameter in die Längsregelung einfließt. Der Begriff "aktuell" bedeutet, dass die Parameterwerte beim Betrieb des Fahrzeugs, beispielsweise während der Fahrt, quasi in Echtzeit bestimmt und fortlaufend aktualisiert werden.

Ein besonders vorteilhafter fahrbahnspezifischer Parameter ist der Fahrbahnreibwert, da Unterschiede im Fahrbahnreibwert einen hohen Einfluss auf das Bremsverzögerungsvermögen sowohl des Fahrzeugs als auch des Fremdfahrzeugs haben und somit den erforderlichen Sicherheitsabstand maßgeblich beeinflussen.

Des Weiteren kann eine vorgegebene Anzahl von Fahrbahnzustandsklassen und/oder Fahrbahnreibwertklassen vorgesehen sein, wobei wenigstens eine dieser Klassen anhand des aktuell bestimmten fahrbahnspezifischen Parameters ausgewählt und zur Fahrzeug-Längsregelung berücksichtigt wird.

Vorzugsweise umfasst das Betriebsverfahren weiter den Schritt der Bestimmung einer Fahrzeugklasse des sich schräg von hinten annähernden Fremdfahrzeugs, wobei die Bestimmung eines Sicherheitsabstandes der Längsregelung und/oder der Zeitdauer oder des Abstands bis zur einer möglichen seitlichen Kollision in Abhängigkeit von der bestimmten Fahrzeugklasse erfolgt. Beispielsweise kann in Abhängigkeit der bestimmten Fahrzeugklasse des Fremdfahrzeugs das spezifische Bremsverzögerungsvermögen der Fahrzeugklasse bestimmt werden. Dies hat den Vorteil, dass die Bestimmung des erforderlichen Sicherheitsabstandes bei der Fahrzeug-Längsregelung situativ an die Paarungen der Fahrzeugklasse des Fahrzeugs und Fremdfahrzeugs angepasst werden kann.

Eine besonders genaue Längsregelung auf den tatsächlich erforderlichen Sicherheitsabstand wird ermöglicht, wenn die Längsregelung in Abhängigkeit sowohl des aktuellen fahrbahnspezifischen Parameters sowie der Fahrzeugklasse des Fremdfahrzeugs erfolgt. So umfasst das vorliegende Betriebsverfahren vorzugsweise weiter das Anpassen eines vorbekannten Parameters betreffend ein Bremsverzögerungsvermögen des eigenen Fahrzeugs in Abhängigkeit des aktuellen fahrbahnspezifischen Parameters und das Bestimmen eines Parameters betreffend ein Bremsverzögerungsvermögen des Fremdfahrzeugs in Abhängigkeit der bestimmten Fahrzeugklasse des Fremdfahrzeugs und des aktuellen fahrbahnspezifischen Parameters. Hierbei erfolgt die Fahrzeug-Längsregelung in Abhängigkeit der Parameter betreffend das Bremsverzögerungsvermögen des Fahrzeugs und des Fremdfahrzeugs.

Bei ungünstigen Fahrbahnreibwerten, insbesondere bei Niederschlag, werden vor allem die vergleichsweise hohen Bremsverzögerungsvermögen von Sportwagen oder Motorrädern fahrbahnreibwertbedingt sehr stark nivelliert, so dass sich teilweise sogar eine Verschlechterung im Vergleich zur Masse aller Fahrzeuge einstellen kann. Dies resultiert beispielsweise aus dem Aufschwimmen extrem breiter Reifen mangels zügiger Wasserverdrängung aus dem Reifenprofil. Bei solchen Fahrbahnzuständen kann ein schwerer LKW ein vergleichbares oder gar ein besseres Bremsverhalten als ein Sportwagen aufweisen, so dass der Sicherheitsabstand eines LKWs zu einem vorausfahrenden Motorrad zu Gunsten der Verkehrsraumnutzung gefahrlos im Vergleich zu einer trockenen Asphaltfahrbahn verkürzt werden kann. Mit anderen Worten variiert der tatsächlich erforderliche Sicherheitsabstand stark in Abhängigkeit der jeweiligen Fahrzeugklassen des eigenen Fahrzeugs und des Fremdfahrzeugs unter Berücksichtigung des aktuellen Fahrbahnzustands, was mit der vorliegenden Erfindung entsprechend bei der Längsregelung berücksichtigt werden kann.

Die Fahrzeugklassifizierung des Fremdfahrzeugs erfolgt vorzugsweise anhand einer Bestimmung der Silhouette des sich seitlich oder von hinten nähernden Fremdfahrzeugs. Beispielsweise kann die Klasse des Fremdfahrzeugs in Abhängigkeit des bestimmten Abstands, der Höhe und/oder der Breite des Fremdfahrzeugs ermittelt werden. Da verschiedene Fahrzeugklassen, wie Motorräder, Sportwagen, PKWs oder LKWs verschiedene typische Bauhöhen und Breiten aufweisen, kann anhand der Abmaße bzw. der daraus resultierenden Fahrzeugsilhouette die Fahrzeugklasse beispielsweise mittels Radarsensorik bestimmt werden.

Vorzugsweise wird die Fahrzeugklasse des seitlich oder schräg von hinten annähernden Fremdfahrzeugs zusätzlich in Abhängigkeit der seitlichen Silhouette und Fahrzeuglänge ermittelt, wodurch die Genauigkeit der Bestimmung der Fahrzeugklasse verbessert wird.

Gemäß einer alternativen Ausführungsform können fahrzeugspezifische Parameter des Fremdfahrzeugs, wie dessen Klasse oder dessen Bremsverzögerungsvermögen direkt mittels Fahrzeug-zu-Fahrzeug Kommunikation von diesem Fremdfahrzeug empfangen werden, so dass die Fahrzeug-Längsregelung abhängig von den empfangenen fahrzeugspezifischen Parametern des Fremdfahrzeugs erfolgt. Dies hat den Vorteil, dass derartige Parameter nicht vom Fahrzeug selbst bestimmt werden müssen, sondern unter Vermeidung etwaiger Messungenauigkeiten direkt vom Fremdfahrzeug empfangen werden können. Dies setzt allerdings voraus, dass sowohl das Fahrzeug als auch das Fremdfahrzeug zum Senden bzw. Empfangen derartiger Daten entsprechend eingerichtet sind. Alternativ könnte das Fahrzeug derartige fahrzeugspezifische Parameter des Fremdfahrzeugs auch von einer stationären Sendestation am Straßenrand empfangen.

Die Genauigkeit der Fahrzeug-Längsregelung kann auch durch Bestimmung einer oder mehrerer aktueller fahrzeugspezifischer Parameter, die das Bremsverzögerungsvermögen des Fahrzeugs beeinflussen und in die Fahrzeug-Längsregelung einfließen, verbessert werden.

Vorzugsweise umfasst ein aktueller fahrzeugspezifischer Parameter den Fahrzeugtyp des eigenen Fahrzeugs. Der Fahrzeugtyp des eigenen Fahrzeugs ist konstruktionsbedingt von vornherein bekannt und entweder im Fahrerassistenzsystem fest eingerichtet oder wird einmalig bei Betriebsaufnahme eingestellt.

Weiterhin kann der aktuelle fahrzeugspezifische Parameter einen Beladungszustand umfassen. Der Beladungszustand kann als das aktuelle Gewicht des Fahrzeugs, das aktuelle Gewicht eines Anhängers und/oder das aktuelle Gewicht einer Beladung ermittelt werden. Insbesondere bei Nutzfahrzeugen kann das aktuelle Fahrzeuggewicht durch Beladung oder Personen stark variieren. Da das fahrzeugspezifische Bremsverzögerungsvermögen von der aktuellen Beladung abhängig ist, kann eine genauere Fahrzeug-Längsregelung erreicht werden, wenn die Fahrzeugbeladung aktuell erfasst wird und in die Fahrzeug-Längsregelung einfließt. In ähnlicher Weise kann die Genauigkeit der Fahrzeug-Längsregelung verbessert werden, wenn das Vorhandensein eines Anhängers erkannt wird und in die Fahrzeuglängsregelung einfließt.

Des Weiteren kann der aktuelle fahrzeugspezifische Parameter auch spezifizieren, ob ein Anhänger an- oder abgekoppelt ist. Durch An- oder Abkupplung eines Anhängers oder Aufliegers ergeben sich starke Differenzen im Brems-(Beschleunigungs-)vermögen, so dass es vorteilhaft ist, den zutreffenden Zustand des Gesamtfahrzeugs zu erkennen und bei der Einstellung des Sicherheitsabstandes zu berücksichtigen.

Gemäß einer weiteren vorteilhaften Ausgestaltungsform werden ein oder mehrere reifenspezifische Parameter des eigenen Fahrzeugs erfasst, die in die Längsregelung einfließen. Beispiele für reifenspezifische Parameter sind der Reifenluftdruck, der Reifenzustand und/oder eine Reifenklasse. So können allein durch den Reifentyp oder die Reifenklasse verursachte Streuungen in Reibung zwischen Fahrbahn und Reifen das Bremsverzögerungsvermögen des Fahrzeugs stark beeinflussen. So haben je nach Reifentyp Sommer-, Winter-, Ganzjahres- oder Off-Road-Reifen unterschiedliche Reibungscharakteristika zwischen Fahrbahn und Reifen. Folglich kann bei einer zusätzlichen Berücksichtigung des Reifentyps als Parameter bei der Längsregelung eine verbesserte Genauigkeit erreicht werden. In vergleichbarer Weise ergeben sich insbesondere bei Niederschlag Schwankungen in der Reibung zwischen Fahrbahn und Reifen für unterschiedliche Reifenprofiltiefen.

Ferner ist es vorteilhaft, wenn zusätzlich der Zustand der Bremsanlage als fahrzeugspezifischer Parameter in die Längsregelung einfließt. Sowohl der aktuelle Belastungs- als auch der Wartungszustand der Bremsanlage am eigenen Fahrzeug können einen signifikanten Einfluss auf das Abbremsvermögen des eigenen Fahrzeugs haben. So lassen beispielsweise Trommelbremsen unter Belastung der mitunter ungleichen Ausdehnung der topfförmigen Trommel in ihrer Wirkung stark nach. Ebenso kann die Wirkung der Bremsbeläge durch Hitze und Verschleiß abfallen.

Vorzugsweise ist das Betriebsverfahren weiter eingerichtet, eine dreidimensionale Bahnkurve des sich schräg von hinten annähernden Fremdfahrzeugs sowie eine dreidimensionale Bahnkurve des eigenen Fahrzeugs zu ermitteln und die Fahrzeug-Längsregelung in Abhängigkeit der ermittelten Bahnkurven zu berechnen. Durch die Berücksichtigung der dreidimensionalen Bahnkurven sowohl des eigenen Fahrzeugs als auch des Fremdfahrzeugs können Steigungen und Gefälle und die damit verbundenen Änderungen in den Bremsverzögerungsvermögen sowohl des Fahrzeugs als auch des Fremdfahrzeugs durch den Einfluss der Hangab-/Hangauftriebskraft berücksichtigt werden. Zusätzlich oder alternativ können der Straßentyp und der dreidimensionale Verlauf der Bahnkurve der Straße ermittelt werden und in die Längsregelung einfließen.

Das erfindungsgemäße Fahrerassistenzsystem zur Fahrzeug-Längsregelung eines Fahrzeugs bezüglich eines Fremdfahrzeugs umfasst insbesondere eine Bereitstellungseinrichtung, die zum Bereitstellen eines sich ändernden Einfallswinkels eines sich seitlich oder von schräg hinten annähernden Fremdfahrzeugs eingerichtet ist und eine Reglereinheit, die zur Durchführung der Fahrzeuglängsregelung, wie zuvor beschrieben, eingerichtet ist, insbesondere zur Durchführung der Fahrzeuglängsregelung in Abhängigkeit von dem sich ändernden Einfallswinkels. Die zuvor beschriebenen Aspekte des Betriebsverfahrens gelten somit auch für die Reglereinheit des Fahrerassistenzsystems.

Bevorzugte Ausführungsformen der vorliegenden Erfindung werden im Folgenden beispielsweise und exemplarisch unter Bezugnahme auf die beigefügten Zeichnungen näher beschrieben.

| | |
|---|---|
| Fig. 1 | zeigt ein Blockdiagramm und illustriert beispielhaft die ermittelten Daten und berechneten Funktionsgrößen eines Fahrerassistenzsystems gemäß einem Ausführungsbeispiel; |
| Fig. 2 | zeigt eine Tabelle mit typischen Bremsverzögerungsvermögen in Abhängigkeit von verschiedenen fahrbahn- und fahrzeugspezifischen Parametern gemäß einem Ausführungsbeispiel; |
| Fig. 3 | illustriert den Abstand und Einfallswinkel zwischen Fahrzeug und Fremdfahrzeug sowie die Erkennung der Fahrzeugklasse gemäß einem Ausführungsbeispiel; |
| Fig. 4 | zeigt ein Ablaufdiagramm zur Illustration eines Regelungsablaufs für eine typische Fahrsituation; |
| Fig. 5A und 5B | illustrieren schematisch die Erkennung des Straßenverlaufs anhand der Veränderung der Fahrzeugsilhouetten gemäß einem Ausführungsbeispiel; |
| Fig. 6 | zeigt ein Ablaufdiagramm zur Illustration eines Regelungsablaufs für eine weitere Fahrsituation gemäß einem Ausführungsbeispiel; |
| Fig. 6A | zeigt ein Ablaufdiagramm zur Illustration eines Regelungsablaufs für die Fahrsituation aus Fig. 6 gemäß einem weiteren Ausführungsbeispiel; |
| Fig. 7A | illustriert schematisch die im Ablaufdiagramm von Fig. 6 beschriebene Fahrsituation; |

Fig. 7B         illustriert schematisch eine Reaktionsphase, die dem Fahrer im Ablaufdiagramm gemäß Fig. 6 eingeräumt wird;

Fig. 8         zeigt ein Ablaufdiagramm zur Illustration eines Regelungsablaufs für eine weitere Fahrsituation gemäß einem Ausführungsbeispiel; und

Fig. 9         illustriert schematisch die Fahrsituation gemäß dem Ablaufdiagramm aus Fig. 8.

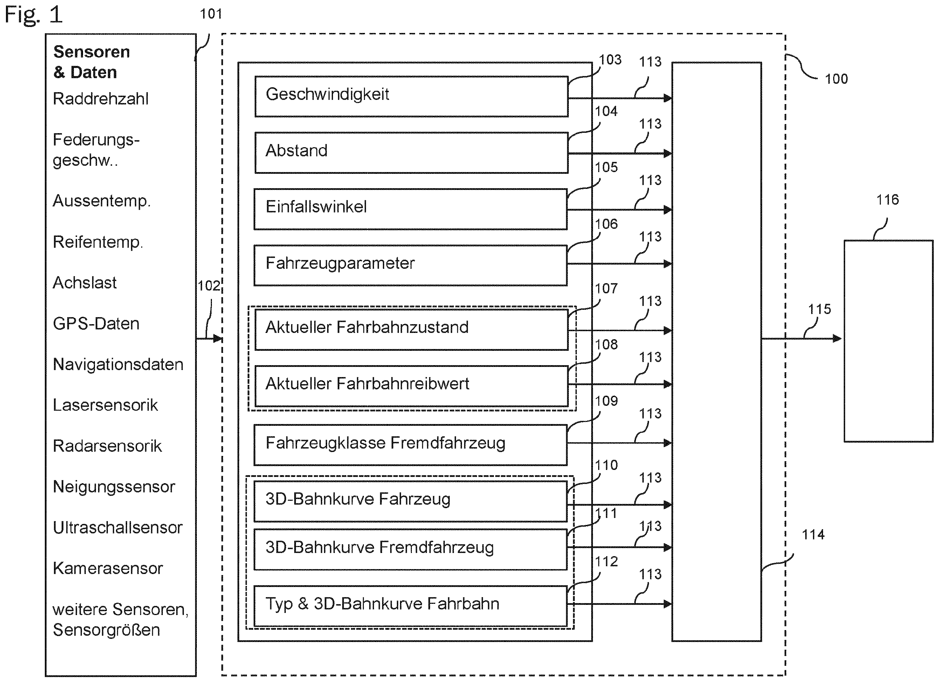

Das Blockdiagramm der Fig. 1 illustriert die verwendeten Sensoren und Daten 101 und die damit ermittelten Funktionsgrößen 103 bis 112, die in die Abstandsregelung einfließen können. Die verwendeten Sensoren und Daten 101 umfassen die aktuelle Raddrehzahl, Federungsgeschwindigkeit, Außentemperatur, Reifentemperatur und Achslast. Die verwendeten Sensoren und Daten 101 umfassen weiterhin GPS-Daten, Navigationsdaten oder Daten, die mittels Lasersensorik, Radarsensorik, einem Neigungssensor, Ultraschallsensor, einem Kamerasensor oder weiterer Sensorgrößen ermittelt werden. Bei den zuvor genannten Daten und Sensoren 101 handelt es sich um aus dem Stand der Fahrzeugtechnik bekannte Messgrößen und Sensoren.

Diese erfassten Daten 101 werden über eine Datenverbindung 102 an ein Fahrerassistenzsystem zur Fahrzeug-Längsregelung 100 übermittelt. Mittels der übermittelten Daten 101 werden mehrere Funktionsgrößen bzw. fahrbahn- und fahrzeugspezifische Parameter 103 bis 112 ermittelt, die in die Abstandsregelung einer Reglereinheit 114 einfließen.

Eine aus dem Stand der Technik bekannte Funktionsgröße zur Längsregelung ist die eigene Fahrgeschwindigkeit 103 des Fahrzeugs. Diese kann über die Raddrehzahl und/oder mittels GPS-Daten ermittelt werden.

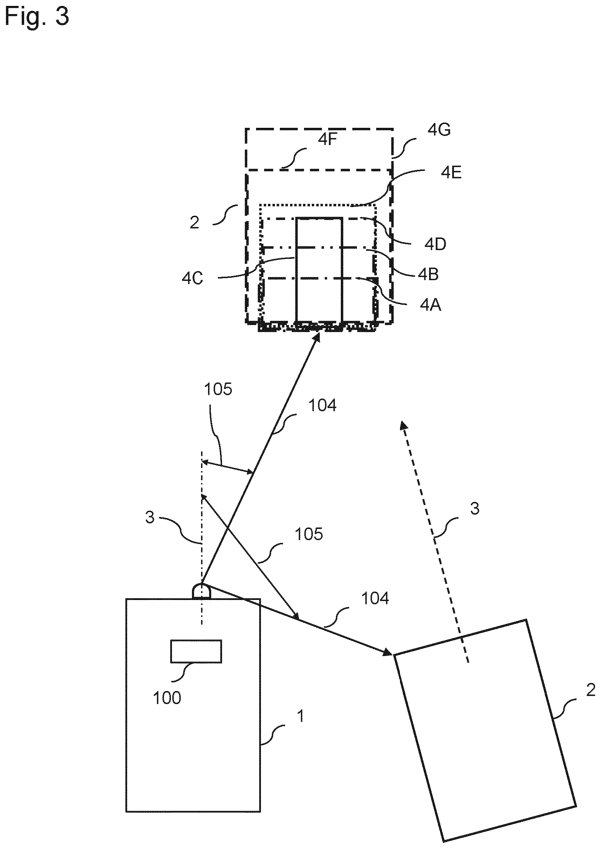

Der zeitaktuell gemessene kürzeste Abstand 104 zum Fremdfahrzeug 2 und dessen Veränderung kann beispielsweise mittels Radarsignalen ermittelt werden, die am Fremdfahrzeug 2 reflektiert werden. Aus der eigenen Fahrgeschwindigkeit 103 und dem zeitlichen Verlauf des gemessenen Abstands zum Fremdfahrzeug 2 kann die Fahrgeschwindigkeit 103 des Fremdfahrzeugs 2 sowie ein zeitaktuelles Brems- bzw. Beschleunigungsverhalten des Fremdfahrzeugs 2 und des Fahrzeugs 1 ermittelt werden. Der kürzeste Abstand ist in Fig. 3 als Länge des Pfeils 104 dargestellt. Bei einem gerade oder leicht seitlich versetzt vorausfahrenden Fremdfahrzeug 2 (oberes Fahrzeug in Fig. 3) entspricht der Abstand im Wesentlichen der Entfernung von der Frontsilhouette des Fahrzeugs 1 zur Mitte der Hecksilhouette des Fremdfahrzeugs 2. Bei einem sich seitlich von hinten annähernden Fremdfahrzeug 2 (unteres Fahrzeug in Fig. 3) wird der kürzeste Abstand im Wesentlichen von dem dem Fahrzeug 1 zugewandten, vorderen seitlichen Karosserieabschnitt des Fremdfahrzeugs 2 bestimmt.

Falls die Fahrtrichtung zwischen eigenem Fahrzeug 1 und Fremdfahrzeug 2 nicht identisch ist, ist der Einfallswinkel 105 zwischen Fahrzeug 1 und Fremdfahrzeug 2 eine für die Längsregelung wichtige Größe, insbesondere bei seitlicher Annäherung oder Einschervorgängen von Fremdfahrzeugen 2. Wie in Fig. 3 illustriert, ist der Einfallswinkel 105 der Winkel zwischen Fahrtrichtung 3 des Fahrzeugs 1 und dem Abstandsvektor 104 zum Fremdfahrzeug 2 und kann beispielsweise mittels eines Radarsensors 6A ermittelt werden. Der Einfallswinkel 105 und der gemessene kürzeste Abstand 104 bzw. deren zeitlicher Verlauf bestimmen maßgeblich die Gefährlichkeit und das Kollisionsrisiko des zeitlichen Ablaufs der Verkehrssituation.

Wie in Fig. 1 weiter gezeigt, werden weiterhin verschiedene Fahrzeugparameter 106 des eigenen Fahrzeugs 1 ermittelt, die für die Bestimmung des aktuellen Bremsverzögerungsvermögens des Fahrzeugs 1 verwendet werden.

Beispielsweise kann der Fahrzeugtyp erfasst werden. Dem eigenen Fahrzeugtyp und der technischen Fahrzeugausführung liegt ein konstruktiv bedingtes Abbrems- (und Beschleunigungs-)vermögen zugrunde. Dieses bildet die Basis für weitere Berechnungen zur Längsregelung für die jeweilig vorliegende Fahrsituation. Der Fahrzeugtyp bzw. die technische Fahrzeugausführung ist typischerweise bereits im Fahrerassistenzsystem 100 voreingestellt, so dass dieser nicht neu bzw. laufend ermittelt werden muss.

Weitere mögliche aktuelle Fahrzeugparameter 106 basieren auf der aktuellen Beladung des Fahrzeugs 1 oder geben an, ob ein Anhänger angekoppelt ist. Der Beladungszustand kann als das aktuelle Gewicht des Fahrzeugs 1, als das aktuelle Gewicht eines Anhängers und/oder als das aktuelle Gewicht einer Beladung ermittelt werden. Das Gesamtgewicht verteilt sich auf die Achsen und kann mit deren Einfederungshöhe anhand der Federkennlinie der Federbeine errechnet werden.

Weitere aktuelle Fahrzeugparameter 106 beschreiben den Zustand der Reifen, und umfassen mehrere reifenspezifische Parameter des eigenen Fahrzeugs 1, wie den Reifenzustand und den Reifentyp mit definierten bzw. festgelegten Reifenklassen, z.B., Sommer-, Winter-, Ganzjahres- oder Off-Road-Reifen. Der Reifenzustand kann als Profiltiefe, beispielsweise in Prozent vom Neuzustand, erfasst werden. Dies gilt auch für den Fall eines nachgeschnittenen Reifens. Eine Verschleißzustandserkennung des Reifens ist aus der Differenz der aus dem Abrollumfang errechneten Fahrzeuggeschwindigkeit und der über GPS erfassten Geschwindigkeit möglich, so dass der Verschleißzustand der Reifen automatisch ermittelt wird und nicht manuell eingegeben werden muss.

Weitere mögliche aktuelle Fahrzeugparameter 106 spezifizieren den Zustand der Bremsanlage, beispielsweise basierend auf dem aktuellen Wartungszustand oder dem aktuellen Belastungszustand der Bremsanlage 116. Letzterer, insbesondere die situative und zeitaktuelle Erhitzung derart anfälliger Bremsanlagen 116, kann durch örtliche Temperatur- und Verschleißsensoren erkannt und entsprechend bei der Fahrzeug-Längsregelung berücksichtigt werden.

Eine weitere Klasse von Funktionsgrößen, die in die Fahrzeug-Längsregelung einfließen, betreffen Parameter, die die aktuelle Fahrbahn 5 beschreiben. So wird ein aktueller Fahrbahnzustand 107 ermittelt. Der Fahrbahnzustand 107 kann aus der unmittelbaren Erfassung von Fahrbahnparametern, wie Rauheit der Oberfläche, Welligkeit der Fahrbahn 5, Oberflächentemperatur an der Fahrbahn 5, etc. ermittelt werden, beispielsweise abgeleitet aus der Arbeit bzw. Bewegung der Feder- und Dämpfungselemente zur Stabilisierung der gefederten Fahrwerks- und Aufbaumassen des Fahrzeugs 1.

Zudem können zur genaueren Beurteilung von Höhenunterschieden des Querprofils der Fahrbahn 5 Ultraschallsensoren eingesetzt werden. Mittels entsprechender Sensordaten kann der Zustand der Fahrbahn 5 klassifiziert werden, beispielsweise mittels einer dreistufigen Klassifizierung der Fahrbahn 5 in "gut", "mittel" und "schlecht". Der ermittelte Fahrbahnzustand kann dann bei der Ermittlung des Bremsverzögerungsvermögens des eigenen Fahrzeugs 1 und des Fremdfahrzeugs 2 beispielsweise über einen Korrekturfaktor oder durch Verwendung entsprechender experimentell bestimmter Versuchsdaten berücksichtigt werden.

Ein weiterer Fahrbahnparameter ist der aktuelle Fahrbahnreibwert 108. Dieser resultiert einerseits aus der Fahrbahnoberfläche und andererseits aus dem Witterungseinfluss. Beide Einflussfaktoren können mit Radarsensoren, Kamera-Systemen (auch Infrarot) oder Laser-Scanner in logischer Verknüpfung mit einer Fahrbahnstrukturerkennung zur Durchführung von Bildvergleichen basierend auf einer Fahrbahndatenbank, und/oder Daten zur Helligkeit, Echoauswertung (Stärke und Streuung einer akustischen Reflexion) und der Außentemperatur gewonnen werden.

Die Datenauswertung führt zu einer Reibwerterkennung mit definierten bzw. festgelegten Reibwertklassen. Abhängig vom Reibwert $\mu F$ der Fahrbahnen 5 werden beispielsweise folgende Fahrbahnreibwertklassen gebildet werden: $\mu F\_1 > 0,8$; $\mu F\_2 > 0,5$ bis $0,8$; $\mu F\_3 = 0,2$ bis $0,5$; $\mu F\_4 < 0,2$.

Bezüglich weiterer Details zur Bestimmung von Reifenverschleiß, Fahrbahnzustand und Fahrbahnreibwert wird auf die Druckschrift DE 102011 108 110 A1 verwiesen.

Eine weitere Funktionsgröße, die in die Fahrzeug-Längsregelung eingeht, ist die Fahrzeugklasse 109 des Fremdfahrzeugs 2. Verschiedene Fahrzeugklassen 109 weisen in der Regel unterschiedliche Bremsverzögerungsvermögen auf. Durch die Bestimmung der Fahrzeugklasse 109 des Fremdfahrzeugs 2 kann der Sicherheitsabstand zum vorausfahrenden Fahrzeug 2 an die vorliegende Fahrzeugklasse 109 angepasst werden. So haben beispielsweise PKWs, aber auch Motorräder, im Vergleich zu LKWs oder Bussen in der Regel ein deutlich höheres Bremsverzögerungsvermögen.

Fig. 3 illustriert schematisch, wie die Klasse 109 des vorausfahrenden Fahrzeugs 2 anhand der Fahrzeugsilhouette bestimmt wird. Fig. 3 zeigt verschiedene mögliche Abmaße von Hecksilhouetten 4A bis 4G eines vorausfahrenden Fremdfahrzeugs 2. Die mit 4A bezeichnete Silhouette entspricht aufgrund der niedrigen Höhe einem Sportwagen, die Silhouette 4B mit vergleichbarer Breite, aber größerer Höhe einem PKW. Die Silhouette 4C mit schmaler Breite entspricht einem Motorrad; die Silhouette 4D mit ähnlicher Breite wie Sportwagen und PKW, aber größerer Höhe, entspricht einem SUV. Die Silhouette 4E entspricht einem Transporter, die Silhouette 4F einem kleinen LKW oder Stadtbus, während die größte Silhouette 4G einem LKW oder Reisebus entspricht.

In ähnlicher Weise kann die Fahrzeugsilhouette eines sich seitlich oder seitlich von hinten annähernden Fremdfahrzeugs 2 bestimmt werden. Hierzu können auch zusätzliche Sensoren (nicht gezeigt) an der Seite des eigenen Fahrzeugs 1 angeordnet werden, so dass diese mittels Radar-, Laser-, oder Kamerasensorik die Silhouette bzw. die Fahrzeugklasse 109 des sich seitlich annähernden Fremdfahrzeugs 2 bestimmen können. Die Sensoren können auch verwendet werden, um den Abstand 104 und den Einfallswinkel 105 des sich seitlich annähernden Fremdfahrzeugs 2 zu bestimmen.

Im Längsregler ist eine vorgegebene Anzahl von Fahrzeugklassen 109 hinterlegt. Mittels einer Radar- oder Kamerasensorik wird die Höhe und/oder die Breite des Fremdfahrzeugs 2 erfasst und damit die Fahrzeugklasse 109 des Fremdfahrzeugs 2 aus der vorgegebenen Anzahl von Fahrzeugklassen 109 bestimmt. Durch die Berechnung und Beachtung der 3-dimensionalen Bahnkurve und durch Berücksichtigung des Einfallswinkels 113 kann eine zusätzliche Geometriekorrektur sowohl der erfassten Breite und Höhe der rückwärtigen Fahrzeugsilhouette, als auch der Länge und Höhe der seitlichen Silhouette, beispielsweise bei Kurvenfahrt erfolgen. Dies wird erforderlich insbesondere dann, wenn die Längen-, Höhen und/oder Breitenanteile des Fremdfahrzeugs vom Sensor nicht ausreichend differenziert werden können.

Ferner wird die Bahnkurve 110 des eigenen Fahrzeugs 1 in allen drei Ebenen bestimmt. Die zurückgelegte und projizierte Bahnkurve 110 des eigenen Fahrzeugs 1 werden zu exakten Einschätzungen der Fahrsituation und des Abstandes zum Fremdfahrzeug 2 berechnet. Die Bahnkurve 110 kann beispielsweise mittels Radar 6, eines Neigungssensors und/oder GPS-Daten ermittelt werden.

Weiterhin, soweit von der eigenen Fahrzeugsensorik ermittelbar, wird auch die Bahnkurve 111 des Fremdfahrzeugs 2 berechnet. Dies kann beispielsweise mittels Radar 6 oder Lasersensorik erfolgen. So kann aus der zeitlichen Veränderung des Abstandes und aus der zeitlichen Veränderung des Einfallswinkels zu einem sich seitlich oder seitlich von hinten annähernden Fremdfahrzeugs 2 die voraussichtliche Bahnkurve 111 des Fremdfahrzeugs 2 bestimmt werden und ob sich die Bahnkurve 110, 111 des eigenen 1 und des Fremdfahrzeugs 2 kreuzen.

Ferner können der Straßentyp und die Bahnkurve 112 der Straßen in drei Ebenen als Funktionsgröße ermittelt werden. Dies kann anhand von folgenden Teilschritten erfolgen: Zuerst kann aus (zeitaktuellen) Navigationsdaten der aktuelle Straßentyp 112 bestimmt werden. Der aktuelle Straßentyp 112 kann folgende Werte umfassen: Bundesautobahn, Schnellstraße, Bundesstraße, Landesstraße, Nebenstraße, Stadtstraße - mehrspurig, Stadtstraße - einspurig, Hauptstraße, Nebenstraße, gegebenenfalls Baustelle. Nachfolgend wird die Anzahl der Fahrspuren in Fahrtrichtung unter Berücksichtigung des ermittelten Straßentyps 112 und/oder aus einem Bildvergleich mit Bildern aus einer Straßentyp-Datenbank ermittelt. Nachfolgend kann auf Basis des ermittelten Straßentyps 112 und der Anzahl der Fahrspuren die Fahrbahnbreite berechnet werden. So kann zur Ermittlung des rechten und gegebenenfalls linken Fahrbandrandes mittels Bildanalyse bestimmt werden, ob Fahrbahnmarkierungen vorhanden sind und/ oder durch Abtastung (beispielsweise mittels Ultraschallsensorik) der Untergrund erfasst werden.

Auf Basis des ermittelten Straßentyps 112, der Anzahl der Fahrspuren und der berechneten Fahrbahnbreite erfolgt dann eine Voraus-Abtastung der Fahrbahn 5, beispielsweise mittels Radar 6 oder Laser. Eine Vorausermittlung der Fahrbahnsteigung 5A kann dann durch Längenänderung des Abtaststrahls erfolgen. Ein Gefälle 5B der Straße kann dann aus Sensierung der Horizontverschiebung durch Bildvergleich unter Berücksichtigung des Fahrzeug-Nickens bzw. der Fahrzeug-Lage erfolgen. Wird ein Gefälle 5B erkannt, erfolgt eine zeitnahe Sensierung des Gefällegrades durch zumindest einen der folgenden Schritte: Sensierung der Achslastverschiebung (Einfederweg), Abnahme der Motorzugleistung (Zugkraftdiagramm), Veränderung der Länge des Fahrbahn-Abtaststrahls, Veränderung der Höhe (über NN) über einen längeren Sekundenzeitraum, oder Veränderung der GPS-Position. Mittels dieser berechneten Daten erfolgt dann eine Vorausberechnung der Bahnkurve 112 der Straße.

Die beschriebenen Funktionsgrößen 103 bis 112 werden über eine Datenverbindung 113 an eine Reglereinheit 114 des Fahrerassistenzsystems zur Längsregelung 100 übertragen.

Auf Basis dieser Funktionsgrößen 103 bis 112 ermittelt die Reglereinheit 114 in Abhängigkeit der ermittelten Bahnkurven, ob eine Zeitdauer oder ein Abstand bis zur einer möglichen Kollision zwischen dem Fahrzeug 1 und dem Fremdfahrzeug 2 einen vorbestimmten Schwellwert unterschritten hat. Auf Basis der ermittelten Bahnkurve kann somit bestimmt werden, ob und wie unmittelbar eine Kollisionsrisiko, beispielsweise durch einen Einschervorgang, besteht.

Die Reglereinheit 114 kann weiter eingerichtet sein, das aktuelle Bremsverzögerungsvermögen des Fahrzeugs 1 bzw. des Fremdfahrzeugs 2 anhand hinterlegter Reglertabellen 200 zu bestimmen. Auf Basis dieser Bremsverzögerungsvermögen und der ermittelten Zeitdauer oder Abstandes bis zur einer möglichen Kollision werden dann der aktuell erforderliche Sicherheitsabstand bestimmt. Ist eine Anpassung des Sicherheitsabstandes notwendig, steuert der Längsregler 114 durch ein Ausgangssignal 115 beispielsweise die Bremssteuerung 116 des Fahrzeugs 1.

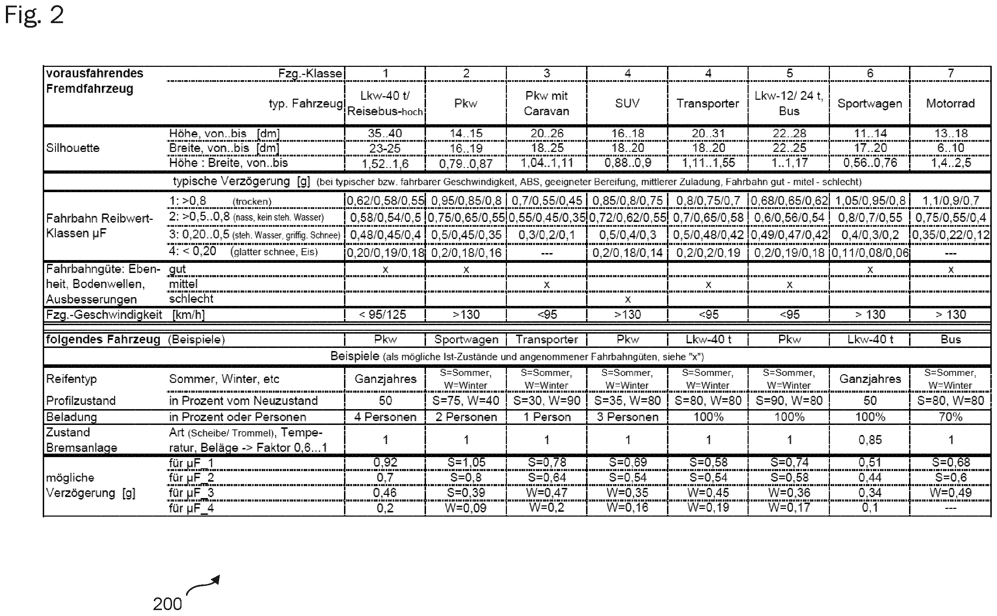

Im Fahrzeugregler 114 sind verschiedene Regelungstabellen 200 hinterlegt, mittels derer anhand der bestimmten Funktionsgrößen jeweils das aktuelle Bremsverzögerungsvermögen des Fahrzeugs 1 und des Fremdfahrzeugs 2 ermittelt wird, um auf dieser Basis einen aktuellen Sicherheitsabstand zu berechnen. Dies ist anhand von Fig. 2 näher erläutert.

Die in Fig. 2 gezeigte Tabelle 200 listet Werte für typische Bremsverzögerungsvermögen in Abhängigkeit von verschiedenen fahrbahn- und fahrzeugspezifischen Parametern 103 bis 112 auf.

Gemäß dem in Fig. 2 beschriebenen Ausführungsbeispiel wird für die Bestimmung des Bremsverzögerungsvermögens eines vorausfahrenden Fremdfahrzeugs 2 zwischen sieben verschiedenen Fahrzeugklassen 109 des Fremdfahrzeugs 2 unterschieden, die in der zweiten Zeile der Tabelle 200 aufgelistet sind. So fallen beispielsweise in eine erste Klasse LKWs bis 40 t bzw. hochgebaute Reisebusse. In der dritten Zeile sind die für die jeweilige Fahrzeugklasse 109 typischen Abmaße der Höhe und Breite der rückwärtigen Fahrzeugsilhouette aufgelistet. So liegt die typische Höhe derartiger LKWs und Reisebusse zwischen 35 und 40 Dezimeter und die Breite im Bereich von 23 bis 25 Dezimeter. In vergleichbarer Weise sind für die Fahrzeugklassen 2 bis 7 die Höhen- und Breitenabmaße von PKWs mit Caravan, SUVs, Transporter, LKW von 12 bis 24 t und Bussen, Sportwagen sowie Motorrädern ausgelistet.

In Tabelle 200 sind für verschiedene Fahrzeugklassen 109 typische Bremsverzögerungsvermögen aufgeführt, unter Annahme einer typischen Fahrgeschwindigkeit des Fremdfahrzeugs 2, Ausstattung mit ABS, geeigneter Bereifung und mittlerer Zuladung. Es wird hierbei insbesondere zwischen drei Fahrbahnzustandsklassen 107 "gut", "mittel" und "schlecht" unterschieden. Weiterhin wird zwischen vier verschiedenen Fahrbahnreibwertklassen $\mu F$ 108 unterschieden, die die unterschiedlichen Reibwertverhältnisse auf trockenen Straßen, nassen Straßen ohne stehendes Wasser, nassen Straßen mit stehendem Wasser bzw. mit griffigem Schnee oder Straßen mit glattem Schnee bzw. Eis berücksichtigen.

Jede Zeile in dem Feld "Fahrbahn-Reibwert-Klassen $\mu F$" der Tabelle 200 gibt das Bremsverzögerungsvermögen für eine der Reibwertklassen 1 bis 4 für die jeweilige Fahrzeugklasse 109 des Fremdfahrzeugs 1 bis 7; 2 an, wobei die Werte in jedem Tabellenfeld nochmals nach den Fahrbahnzuständen gut/mittel/schlecht unterschieden werden.

Durch die Bestimmung des aktuellen Fahrbahnzustands 107 und des aktuellen Fahrbahnreibwertes 108, wie im Zusammenhang mit Fig. 1 beschrieben, kann somit das aktuell zutreffende Bremsverzögerungsvermögen des vorausfahrenden Fremdfahrzeugs 2 ermittelt werden.

Wurde beispielsweise das vorausfahrende Fremdfahrzeug 2 als PKW der Fahrzeugklasse 2 erkannt, der aktuelle Fahrbahnzustand 107 als "gut" ermittelt und der aktuelle Fahrbahnreibwert µF 108 mit einem Wert > 0,8 (Fahrbahnreibwertklasse "1"), so entnimmt man aus dem zugehörigen Feld der Tabelle 200 den Wert 0,95 g für das Bremsverzögerungsvermögen des vorausfahrenden PKWs. Bei einem schlechten Fahrbahnzustand 107 (Fahrbahnzustandsklasse "schlecht"), wäre der Wert 0,8 g.

Bei schlechtem Fahrbahnzustand 107 und einer Fahrbahnreibwertklasse "3" würde sich das Bremsverzögerungsvermögen auf 0,35 g reduzieren. Handelt es sich bei diesen Straßenverhältnissen bei dem vorausfahrenden Fremdfahrzeug 2 dagegen um einen Transporter (Fahrzeugklasse 4), wäre das entsprechende Bremsverzögerungsvermögen 0,42 g.

Die Tabelle 200 verdeutlicht, dass die der Abstandsregelung zugrunde liegenden Bremsverzögerungsvermögen eine hohe Abhängigkeit von dem aktuellen Fahrbahnzustand 107 und dem aktuellen Fahrbahnreibwert 108 aufweisen, die sich während einer Fahrt laufend ändern können. Durch die fortwährende Bestimmung dieser Fahrbahnparameter kann somit die Abstandsregelung ständig an den aktuellen Fahrbahnzustand angepasst werden, so dass für die Abstandsregelung jeweils ein aktuell gültiges Bremsverzögerungsvermögen zugrunde liegt.

Wird bei der Bestimmung des Bremsverzögerungsvermögens des Fremdfahrzeugs 2 zusätzlich die Fahrzeugklasse 109 des vorausfahrenden Fahrzeugs 2 zugrunde gelegt, kann die Genauigkeit des bestimmten Bremsverzögerungsvermögens noch signifikant erhöht werden.

So weist ein Motorrad (Fahrzeugklasse 7, vgl. letzte Spalte in Tabelle 200) bei guten Fahrbahnzuständen 107 und einer aktuellen Fahrbahnreibklasse 108 von "1" (trockene Fahrbahn) ein im Vergleich zu einem schweren LKW der Fahrzeugklasse "1" besseres Bremsverzögerungsvermögen von 1,1 g im Vergleich zu 0,62 g für den LKW auf. Dagegen verschlechtert sich das Bremsverzögerungsvermögen des Motorrads bei schlechten Fahrbahnzuständen 107 und einer aktuellen Fahrbahnreibklasse 108 von "3" (stehendes Wasser oder griffiger Schnee) auf 0,12 g. Die des schweren LkWs verschlechtert sich dagegen nur auf 0,4 g, so dass das Bremsverzögerungsvermögen des LKWs bei diesen Straßenverhältnissen größer als das des Motorrads ist. Die gleichzeitige Berücksichtigung der aktuellen Fahrbahnparameter und der jeweiligen Fahrzeugklasse 109 des Fremdfahrzeugs 2 ermöglicht somit eine wesentlich genauere Abstandsregelung, die sich an die aktuelle Fahrumgebung anpassen kann.

Fig. 2 illustriert weiterhin die Abhängigkeit des Bremsverzögerungsvermögens des eigenen Fahrzeugs 1 in Abhängigkeit von fahrzeugspezifischen Parametern 106 und von fahrbahnspezifischen Parametern, wobei wiederum zwischen den verschiedenen Fahrzeugklassen 1 bis 7 unterschieden wird. Fig. 2 zeigt lediglich ausschnittsweise beispielhafte Werte für einzelne Parameterkombinationen.

Die Spalte "1" gibt exemplarisch für einen PKW mit den in Klammern angegebenen Werten für die fahrzeugspezifischen Parameter Fahrzeugklasse (PKW), angenommener Reifentyp (Ganzjahresreifen), Reifenzustand (Profilzustand von 50% vom Neuzustand), Beladungszustand (4 Personen), Zustand Bremsanlage (Faktor 1) das Bremsverzögerungsvermögen an. Hierbei sind nur Werte für einen angenommenen Fahrbahnzustand 107 mit dem Wert "gut" dargestellt, was durch die Auswahl "x" in der Zeile Fahrbahngüte ersichtlich ist. Für diese Parameter geben nun die unteren vier Zeilen des Felds "mögliche Verzögerung" das Bremsverzögerungsvermögen des Fahrzeug für die vier verschiedenen Fahrbahnreibwertklassen 108 an.

Analog sind beispielsweise in Spalte "3" bzw. "Transporter" die jeweiligen Bremsverzögerungsvermögen für einen Transporter als vorausfahrendes Fremdfahrzeug 2 bei "mittlerer" Fahrbahngüte, Beladung mit einer Person und Bremsanlagenfaktor "1" angegeben, wobei die Werte für das Bremsverzögerungsvermögen getrennt für Sommer- und Winterreifen angegebenen sind (gekennzeichnet durch "S" und "W").

Ferner ist der Tabelle 200 zu entnehmen, dass im Falle eines PKWs, der zu 100 % beladen ist, dessen Zustand der Bremsanlage mit einem Faktor "1" bewertet wurde und der mit Sommerreifen versehen ist, deren Profilzustand 90 % vom Neuzustand entspricht, das aktuelle Bremsverzögerungsvermögen für eine trockene Fahrbahn der Klasse "1" den Wert 0,74 aufweist.

Es wird darauf hingewiesen, dass Fig. 2 nur beispielhaft und ausschnittsweise die im Speicher des Fahrerassistenzsystems 100 hinterlegten Bremsverzögerungsvermögen für ein Fremdfahrzeug 2 und das eigene Fahrzeug 1 für die verschiedenen Wertbereiche der ermittelten Funktionsgrößen 103 bis 112 darstellt.

So ist in Fig. 2 nicht gezeigt, dass auch die dreidimensionalen Bahnkurven und Straßenverläufe zusätzlich in Form weiterer Tabellen oder eines Korrekturfaktors berücksichtigt werden können. Aus den Bahnkurven kann die Differenz der Steigungen der Fahrbahn 5A des Fahrzeugs 1 und Fremdfahrzeugs 2 ermittelt werden, woraus ein Korrekturfaktor aufgrund der zusätzlichen Hangtriebskraft abgeleitet werden kann, um den Wert für das Bremsverzögerungsvermögen von Fahrzeug 1 und Fremdfahrzeug 2 an die Fahrbahnsteigung 5A anzupassen.

Anhand der so bestimmten Bremsverzögerungsvermögen des eigenen Fahrzeugs 1 und des Fremdfahrzeugs 2 kann unter Berücksichtigung der aktuellen Fahrgeschwindigkeit und des Einfallswinkels 105 des Fremdfahrzeugs 2 ein genauer Sicherheitsabstand berechnet werden, auf den das Fahrerassistenzsystem 100 dann einregelt.

Der Einfluss der verschiedenen Funktionsgrößen 103 bis 112 auf das Bremsverzögerungsvermögen kann mittels Versuchsreihen für verschiedene Fahrzeugklassen 109 ermittelt werden. So wirkt sich beispielsweise eine Verschlechterung des Fahrbahnzustands 107 oder des Fahrbahnreibwerts 109 negativ auf das Bremsverzögerungsvermögen der Fahrzeuge 1, 2 aus.

Die ermittelten Bremsverzögerungswerte für verschiedene Kombinationen aus fahrbahn- und fahrzeugspezifischen Parametern 103 bis 112 werden dann als Regelungstabellen im Fahrzeug 1 hinterlegt, auf die Reglereinheit 114 zugreift.

Die folgenden Figuren erläutern beispielhaft die Fahrzeug-Längsregelung für einige typische Fahrsituationen.

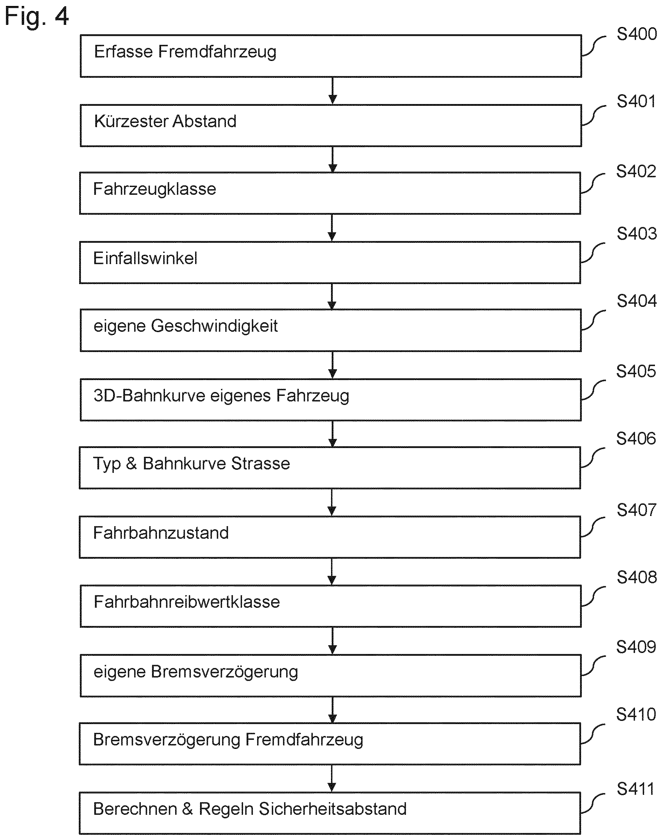

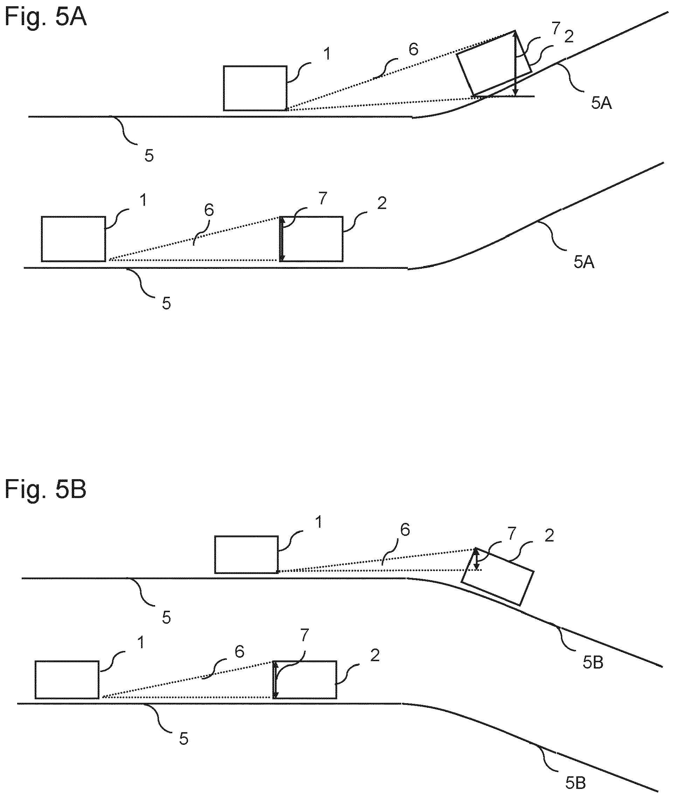

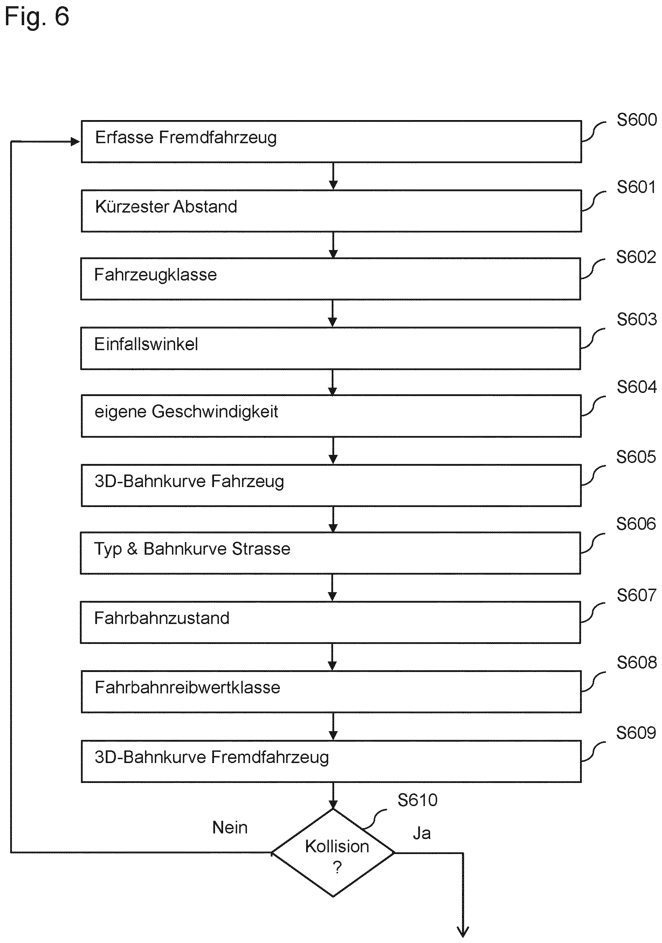

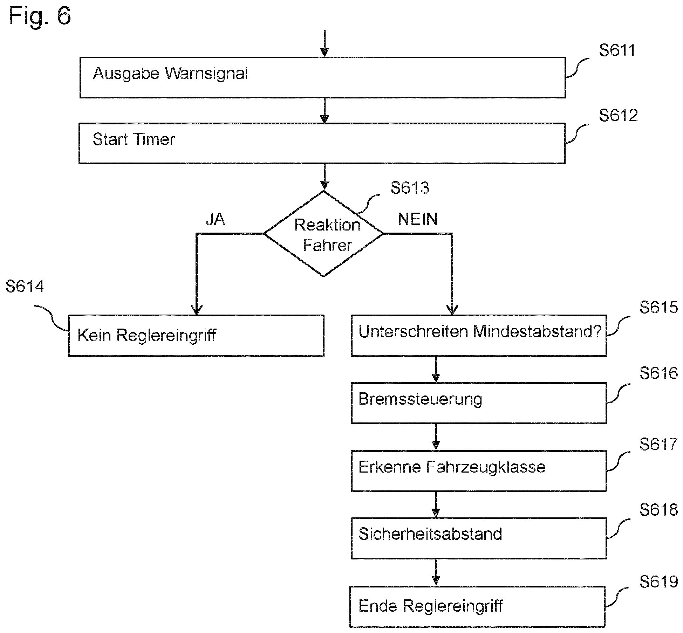

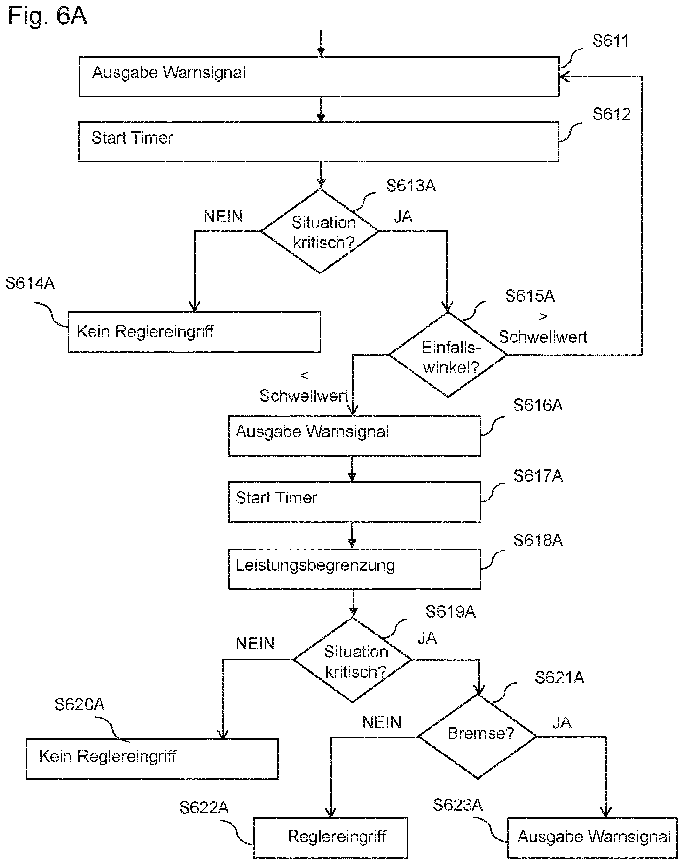

In Fig. 4 ist der Regelungsablauf für eine Fahrsituation beschrieben, bei der ein LKW-Sattelzug 1 einem Sportwagen 2 folgt (siehe auch Fig. 5). Die Fahrzeuge 1, 2 fahren auf einer Bundesautobahn bei trockenem Asphalt und Tageslicht. Die Fahrgeschwindigkeit des Sportwagens 2 beträgt 80 km/h, da der Fahrer einen Tausch-Motor einfährt, während der Sattelzug 1 mit einem zulässigen Gesamtgewicht von 40 t sich langsam mit 85 km/h dem vorausfahrenden Fahrzeug 2 annähert. Das Beispiel der Fig. 4 dient zum besseren Verständnis der Erfindung. Ausführungsbeispiele der Erfindung für Fahrsituationen mit einem sich seitlich oder seitlich von hinten annähernden Fremdfahrzeug 2 sind beispielsweise in den Figuren 6 und 6A beschrieben.

Im Schritt S400 der Fig. 4 wird das vorausfahrende Fremdfahrzeug 2 (der Sportwagen) vom Radar 6 erfasst. Im nächsten Schritt S401 wird der Abstand 104 zwischen dem Sattelzug 1 und dem Sportwagen 2 ermittelt. Anschließend wird im Schritt S402 die Fahrzeugklasse 109 des vorausfahrenden Fahrzeugs 2 anhand des Abstandes 104, der Breite und Höhe des Objekts ermittelt. Die Breite und Höhe des Objekts wird mittels Radarreflexion an der rückseitigen Silhouette des vorausfahrenden Fahrzeugs 2 erfasst. Im vorliegenden Beispiel wird die Silhouette 4a erkannt und somit als Sportwagen 2 identifiziert.

Nachfolgend wird im Schritt S403 der Einfallswinkel 105 zum vorausfahrenden Sportwagen 2 aufgrund Abstand 104 und Fahrzeugbreite bestimmt. Im vorliegenden Ausführungsbeispiel ist der Einfallswinkel <5°, somit fährt das vorausfahrende Fahrzeug 2 in der gleichen Fahrspur. Im Schritt S404 wird die eigene Fahrgeschwindigkeit 103 abgefragt und anschließend im Schritt S405 die eigene dreidimensionale Bahnkurve 110 berechnet. Im angenommenen Beispiel findet eine Geradeausfahrt in der Ebene statt.

In Schritt S406 werden der aktuelle Straßentyp und die Bahnkurve 112 der Straße berechnet. Im vorliegenden Beispiel liegt eine Bundesautobahn und ein gerader Straßenverlauf vor. Anschließend wird im Schritt S407, wie zuvor erläutert, der Fahrbahnzustand berechnet. Im vorliegenden Beispiel liegt eine ebene gute Fahrbahn 5 vor. Im Schritt S408 wird die Fahrbahnreibwertklasse bestimmt: die Fahrbahnreibwertklasse $\mu F\_1 > 0{,}8$. Anhand dieser Daten wird aus den abgelegten Kennwerttabellen im Schritt S409 das eigene aktuelle Bremsverzögerungsvermögen ermittelt, was aufgrund der aktuellen Funktionsgrößen einem Wert von 0,62 g entspricht. Anschließend wird im Schritt S410 das Bremsverzögerungsvermögen für das Fremdfahrzeug 2 bestimmt, was aufgrund der vorliegenden Funktionsgrößen einem Wert von 1,05 g entspricht. Anhand der ermittelten Bremsverzögerungsvermögen wird anschließend im Schritt S411 der Sicherheitsabstand für die Fahrzeug-Längsregelung für eine Geschwindigkeit von 80 km/h des vorausfahrenden Fahrzeugs 2 berechnet.

Für die Berechnung der Sicherheitsabstände und für Vergleichszwecke werden weiterhin die fahrzeugtypische Schwelldauer der Bremsanlage 116 bis zum Anliegen der Bremsbeläge und bis zum weiteren Anstieg des Bremsdrucks bis zum Erreichen des Radblockierdrucks (Beginn der Antiblockierregelung) berücksichtigt. Typische Richtwerte für die Fahrzeugklassen PKW und Motorrad bzw. LKW bzw. Sattelzug sind 0,2 bzw. 0,3 bzw. 0,7 Sekunden. Die Umsetzdauer des Fahrers vom Gas auf Bremspedal bzw. Griff, liegt typischerweise bei 0,2 Sekunden, ist aber nicht reglerrelevant. Ein Richtwert des Sicherheitsabstands zum vorausfahrenden Fahrzeug 2 als Zeitlücke kann dann typischerweise $t_{Sich} = 1{,}8$ Sekunden betragen, ist aber auch nicht reglerrelevant sondern dient nur für Vergleichsrechnungen. Jedoch ist noch die Berechnungs- bzw. Zykluszeit des Reglers 114 zu berücksichtigen, die mit 400 ms angenommen wird.

Bei einem LKW-Sattelzug mit 40 t beträgt die Bremsenschwelldauer 0,7 s, zuzüglich der Berechnungszeit des Reglers 114 von 0,4 s ergibt sich somit eine Gesamtansprechdauer $t_{Break}$ für den Regler von 1,1 s. Aus der Formel

$$t_{Sich} = t_{BReak} + \frac{v_1}{2 * a_1} - \frac{v_2^2}{2 * a_2 * v_1} \qquad (1)$$

$t_{RBreak}$ = Gesamtansprechdauer Fahrerassistenzsystem 100 und Bremse 116
$a_1$ = Mindestverzögerung Folgefahrzeug 2
$a_2$ = Verzögerung vorausfahrendes Fremdfahrzeug 2
$v_1$ = Geschwindigkeit 103 Folgefahrzeug 2
$v_2$ = Geschwindigkeit vorausfahrendes Fremdfahrzeug 2

errechnet sich der Sicherheitsabstand von 41 m entsprechend einer Zeitlücke $t_{Sich} = 1{,}85$ s. Das Fahrerassistenzsystem 100 regelt daraufhin die Folgefahrt auf dem errechneten Sicherheitsabstand bei gleichen Geschwindigkeiten ein.

Fig. 5A illustriert, wie die Bahnkurve 111 des vorausfahrenden Fahrzeugs 2 anhand der sich verändernden Hecksilhouette des Fahrzeugs 2 ermittelt werden kann. Die Hecksilhouette des vorausfahrenden Fremdfahrzeugs 2 wird vom Fahrzeug 1 mittels eines Radarstrahls 6 erfasst. Die erfasste Höhe 7 der Hecksilhouette des Fremdfahrzeugs 2 verändert sich in Abhängigkeit von Steigung 5A und Gefälle 5B der Fahrbahn 5.

Beispielsweise wird die erfasste Höhe der Hecksilhouette 7 im Vergleich zu der Situation, wo sich beide Fahrzeuge 1, 2 in einer Ebene befinden, bei Einfahrt des vorausfahrenden Fremdfahrzeugs 2 in eine Steigung scheinbar größer, so dass die steigende Bahnkurve 111 des vorausfahrenden Fremdfahrzeugs 2 vom Folgefahrzeug 1 durch die sich vergrößernde Hecksilhouette erfasst werden kann. In ähnlicher Weise wird die erfassbare Höhe der Hecksilhouette 7 des vorausfahrenden Fremdfahrzeugs 2 kleiner, wenn das vorausfahrende Fremdfahrzeug 2 in ein Gefälle einfährt. Dies ist in Fig. 5B illustriert. In vergleichbarer Weise (nicht gezeigt) können Rechts- oder Linkskurven 111 der Fahrbahn des vorausfahrenden Fremdfahrzeugs 2 durch die sich verändernde Breite der Hecksilhouette des Fremdfahrzeugs 2 erfasst werden.

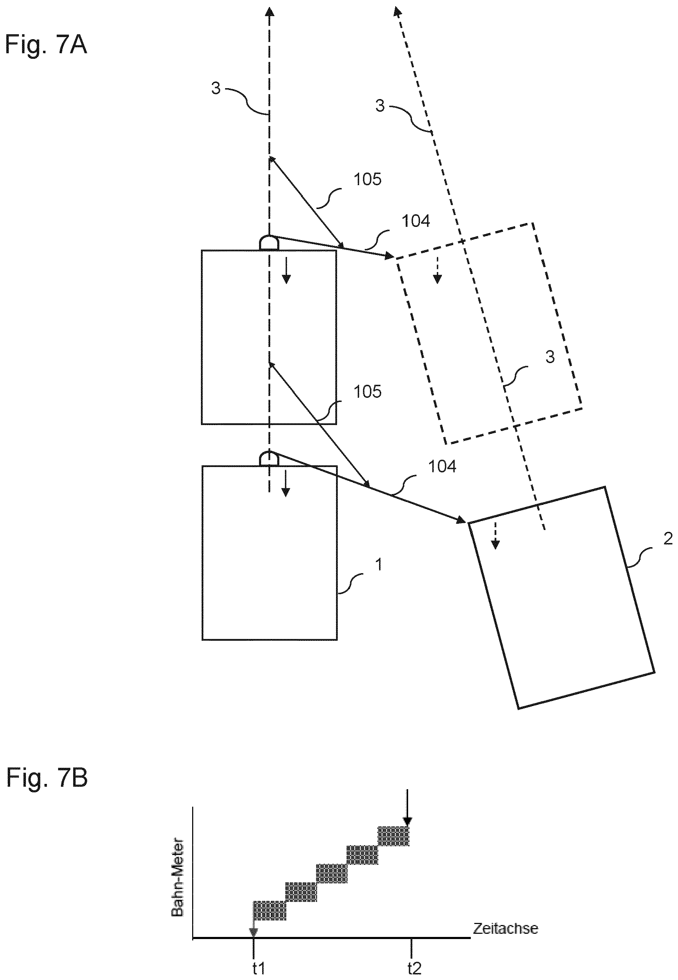

Fig. 6 illustriert den Regelungsablauf für eine weitere typische Fahrsituation. In diesem Beispiel fährt ein LKW 1 auf der rechten Spur einer Bundesautobahn mit einer Geschwindigkeit von 75 km/h bei starkem Regen und schlechter Sicht. Ein Fremdfahrzeug 2 in Form eines LKWs nähert sich von hinten rechts, wie in Fig. 7A illustriert, zum Einfädeln mit 85 km/h und gerät somit in den Radar-Einfallswinkel von LKW 1.

In Schritt S600 wird das sich von hinten seitlich nähernde Fremdfahrzeug 2 vom Radar 6 erfasst. In Schritt S601 wird der kürzeste Abstand 104 zum Fremdfahrzeug 2 gemessen. Daraufhin wird in Schritt S602 die Fahrzeugklasse 109 des sich nähernden Fahrzeugs 2 aufgrund des Abstands und der Höhe bestimmt und als LKW oder Bus identifiziert. Im Schritt S603 wird der Einfallswinkel 105 aufgrund des Abstands 104 von der linken vorderen Fahrzeugbegrenzung ermittelt, der im vorliegenden Beispiel einen Wert von 150° aufweist. Anschließend wird im Schritt S604 die eigene Fahrgeschwindigkeit 103 erfasst, die in der Regel ständig bekannt vorliegt. Im Schritt S605 wird die eigene dreidimensionale Bahnkurve 110 berechnet, die im folgenden Beispiel einer Geradeausfahrt in der Ebene entspricht. Anschließend werden in Schritt S606 der Straßentyp und die Bahnkurve 112 der Straße berechnet. Gemäß der angenommenen Fahrsituation wird der Straßentyp 112 als Bundesautobahn ermittelt. Anschließend wird im Schritt S607 der Fahrbahnzustand 107 berechnet, wobei gemäß der angenommenen Fahrsituation eine gute Fahrbahn 5 mit ebenem Verlauf vorliegt.

Anschließend wird in Schritt S608 die Fahrbahnreibwertklasse 108 bestimmt, vorliegend $\mu F\_2$ mit Werten von 0,5 bis 0,8. Im folgenden Schritt S609 wird die dreidimensionale Bahnkurve 111 des LKWs 2 berechnet.

Im Schritt S610 wird in Abhängigkeit der ermittelten Bahnkurven 110, 111 anhand mehrerer Faktoren bestimmt, ob ein unmittelbares Kollisionsrisiko besteht. Hierfür wird der Abstand zu einem nächsten vorausfahrenden Fremdfahrzeug 2 bestimmt, das in der gleichen Fahrspur vor dem eigenen Fahrzeug 1 fährt, um zu ermitteln, ob eine ausreichende Lücke für einen Einschervorgang des sich seitlich von hinten annähernden Fremdfahrzeugs 2 vorhanden ist. Im vorliegenden Fall ist die Lücke groß genug, so dass mit einem Einscheren und einem Kollisionsrisiko prinzipiell zu rechnen ist. Weiterhin wird die Relativgeschwindigkeit des sich annähernden Fremdfahrzeugs 2 aus einer zeitlichen Änderung eines Abstandes zwischen Fahrzeug 1 und Fremdfahrzeug 2 und einer Änderung des Einfallswinkels 105 ermittelt. Im vorliegenden Beispiel ist die Relativgeschwindigkeit kleiner als ein vorbestimmter Schwellwert, so dass im Falle eines Einschervorgangs des Fremdfahrzeugs 2 ein Auffahren durch das Fahrzeug 1 zu erwarten ist. Anhand der berechneten Bahnkurven 110, 111 des Fahrzeugs 1 und des Fremdfahrzeugs 2 wird schließlich ermittelt, ob sich die voraussichtlichen Bahnkurven 110, 111 innerhalb des Lückenabstands kreuzen, um zu ermitteln, ob sich ein Einschervorgang aus der aktuellen Bewegung des Fremdfahrzeugs 2 abzeichnet.

Aus den vorgenannten Faktoren wird das Kollisionsrisiko ermittelt, insbesondere ob eine Zeitdauer oder ein Abstand bis zu einer möglichen seitlichen Kollision zwischen Fahrzeug 1 und dem sich seitlich nähernden Fremdfahrzeug 2 einen vorbestimmten Schwellwert unterschritten hat. Falls NEIN, besteht keine unmittelbare Kollisionsgefahr und der Regelungsablauf geht zurück zu Schritt S600, um die Gefahrensituation weiter zu überwachen. Falls jedoch eine Zeitdauer oder ein Abstand bis zu einer möglichen seitlichen Kollision zwischen dem eigenen Fahrzeug 1 und dem Fremdfahrzeug 2 einen vorbestimmten Schwellwert unterschritten hat, d.h. eine Kollision bevorstehen könnte, wird ein Warnsignal in Schritt S611 ausgegeben. Im vorliegenden Beispiel wurde die Gefahr einer seitlichen Kollision oder des Schneidens in 3 bis 4 Sekunden ermittelt und somit in Schritt S611 eine akustische Warnung aus dem Lautsprecher an den Fahrer ausgegeben.

Nachfolgend wird im Schritt S613 bestimmt, ob der Fahrer während einer vorbestimmten Reaktionsphase einen Lenk- und/oder Bremsvorgang oder eine Geschwindigkeitsänderung oder Änderung des Fahrpedals ausführt. Hierfür kann dem Fahrer beispielsweise mittels eines Timers (Zählers) eine Reaktionszeit von 2 Sekunden eingeräumt werden, um dem Fahrer selbst die Möglichkeit zu geben, lenkend auszuweichen oder abzubremsen.

Derartige Gefahrensituationen können durch eine Querregelung des Fahrers in der Regel am besten gelöst werden, so dass vor Eingriff der Längsregelung vorteilhafterweise dem Fahrer eine Reaktionszeit eingeräumt wird. Fig. 7B illustriert die dem Fahrer in Schritt S612 eingeräumte Reaktionsphase zwischen dem Zeitpunkt t1 und t2. Die Länge der Reaktionsphase kann in Abhängigkeit von der bestimmten Zeitdauer des bestimmten Abstands bis zu einer möglichen seitlichen Kollision bestimmt werden.

Ein Ausweichmanöver des Fahrer kann beispielsweise daran erkannt wird, ob der Fahrer einen Lenkvorgang, einen Bremsvorgang, eine Geschwindigkeitsänderung und/oder eine Änderung des Fahrpedals ausführt. Ein Lenkvorgang eines Ausweichmanövers wird bestimmt, falls die Geschwindigkeit der Änderung des Lenkwinkels (x Lenkwinkel / s) größer als ein vorbestimmter Schwellwert ist. Ein für ein Ausweichmanöver typischer Bremsvorgang wird bestimmt, falls die Geschwindigkeit einer Änderung des Bremsdrucks einen vorbestimmten Schwellwert (Änderung Bremsdruck > +/- y bar/s) überschreitet. Alternativ kann ein Bremsvorgang auch über eine Betätigung des Bremspedals oder einer anderen Bremseinrichtung erfasst werden. Ein Gangwechsel oder eine Änderung der Winkelposition der Motorregeleinrichtung (z.B. Gaspedal) mit einer Gaspedalgeschwindigkeit > +/- x Grad/s sind weitere mögliche Beispiele, wie ein Ausweichmanöver des Fahrers erkannt werden kann.

Wird eine diesbezügliche Reaktion des Fahrers in Schritt S613 erkannt, erfolgt kein Reglereingriff S614. Die Fahrzeug-Längsregelung bleibt aber grundsätzlich in Betrieb, um die Verkehrssituation weiter zu erfassen. Falls der Fahrer innerhalb der vorbestimmten Reaktionszeit nicht reagiert und im Schritt S615 erkannt wird, dass ein vorbestimmter Sicherheits-Mindestabstand unterschritten wird, speist die Fahrzeug-Längsregelung den maximalen Bremsdruck in Schritt S616 ein, zusätzlich wird die ABS-Regelung gestartet, da der Reibwert bei 0,55 liegt.

Im Schritt S617 wird aufgrund der nahen Silhouette des sich seitlich annähernden Fremdfahrzeugs 2 das Fremdfahrzeug als LKW (und nicht als Bus) erkannt und klassifiziert. In Schritt S618 erfolgt die Abbremsung solange, bis der auf Basis eines aus Tabelle 200 ermittelten Bremsverzögerungsvermögens für den LKW 2 ermittelte Sicherheitsabstand zum klassifizierten LKW 2 erreicht ist. Nach Erreichen des erforderlichen Sicherheitsabstandes folgt in Schritt S619 ein Ende der Längsregelung, da die unmittelbare seitliche Kollisionsgefahr nicht mehr besteht und der Sicherheitsabstand erreicht ist.

Fig. 6A zeigt ein Ablaufdiagramm zur Illustration eines alternativen Regelungsablaufs für die Fahrsituation aus Fig. 6. Die Schritte S600 bis S612 sind identisch zu den zuvor für die Fig. 6 beschriebenen Schritten und sind daher nicht beschrieben. Im Schritt S613A wird geprüft, ob die Fahrsituation nach Ablauf des in Schritt S612 gestarteten Zählers noch immer kritisch ist. Ist dies nicht mehr der Fall, weil beispielsweise der Fahrer des Fahrzeugs 1 durch einen Lenkvorgang und einen Abbremsvorgang das Kollisionsrisiko reduziert hat, erfolgt in Schritt S614A kein Reglereingriff. Die Fahrzeug-Längsregelung bleibt aber grundsätzlich in Betrieb, um die Verkehrssituation weiter zu erfassen. Falls der Fahrer innerhalb der vorbestimmten Reaktionszeit nicht reagiert hat, wird im Schritt S615A geprüft, ob der aktuelle Einfallswinkel 105 größer als ein vorbestimmter Schwellwert ist. Ist der Einfallswinkel 105 beispielsweise größer als +/-85 Grad, dann befindet sich das Fremdfahrzeug 2 noch nicht vor dem eigenem Fahrzeug 1, so dass ein Einschervorgang nicht unmittelbar bevorsteht. Der Regelkreis geht zurück zu Schritt S611 und gibt erneut ein Warnsignal aus. Ist jedoch der Einfallswinkel 105 beispielsweise kleiner als +/-85 Grad, dann befindet sich das Fremdfahrzeug 2 bereits etwas vor dem eigenem Fahrzeug 1, so dass das Risiko für einen Einschervorgang erhöht ist. In Schritt S616A wird der Fahrer erneut mit einem Warnsignal auf die Gefahrensituation hingewiesen und in Schritt S617A erneut ein Zähler gestartet. Damit wird dem Fahrer erneut die Möglichkeit gegeben, selbst einzugreifen, jedoch erfolgt in Schritt S618A eine Leistungsbegrenzung des Motors, so dass eine Erhöhung der Motor-Leistungsanforderung nicht mehr zugelassen wird.

Nach Ablauf des zweiten Zählers wird in Schritt S619A erneut geprüft, ob die Fahrsituation noch immer kritisch ist. Ist dies nicht mehr der Fall, weil beispielsweise der Fahrer des Fahrzeugs 1 durch einen Lenkvorgang und/oder einen Abbremsvorgang das Kollisionsrisiko reduziert hat, erfolgt in Schritt S620A kein Reglereingriff. Ergibt die Prüfung in Schritt S619A, dass die Fahrsituation weiterhin kritisch ist, wird in Schritt S621A unterschieden, ob das Bremspedal oder eine Bremseinrichtung betätigt wurde. Falls JA, erfolgt in Schritt S623A kein zusätzlicher Reglereingriff, sondern lediglich die Ausgabe eines Warntons, z.B. in kurzen Sekunden-Abständen. Falls NEIN, dann erfolgt in Schritt S622A eine zwangsweise, kontinuierliche Leistungsdrosselung des Motors, solange bis der kritische Abstand 104 zum Fremdfahrzeug 2 wieder überschritten wird und eine Entschärfung der Situation eingetreten ist. Gemäß diesem beispielhaften Verfahren soll dem Fahrer des Fahrzeugs 1 möglichst lange die Möglichkeit eingeräumt werden, durch ein Abbremsen oder eine Querregelung die Gefahr einer Kollision mit einem seitlich einscherenden Fahrzeug 1 selbst zu bereinigen. Eine manuelle Querregelung ist einer erzwungenen automatischen Längsregelung in der Regel überlegen (automatische Verfahren zur Querregelung werden aufgrund der hohen Komplexität und Risiken in der Regel nicht eingesetzt).

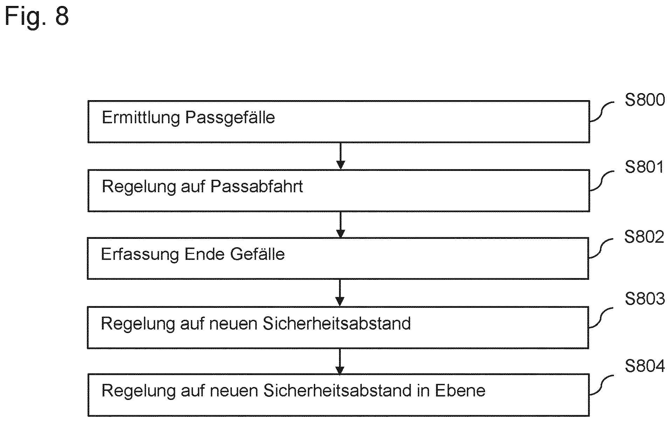

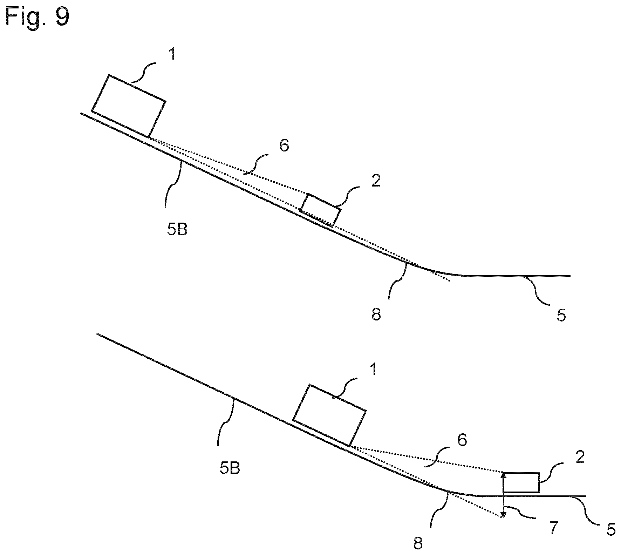

Fig. 8 und 9 illustrieren die Längsregelung für eine weitere typische Fahrsituation. Wie in Fig. 9 dargestellt, folgt im vorliegenden Beispiel ein LKW-Fahrzeug 1 einem vorausfahrenden PKW-Fremdfahrzeug 2 entlang einer Fahrbahn 5 auf einem Abschnitt 5b mit Gefälle. Im vorliegenden Beispiel fährt der LKW 1 mit einer Geschwindigkeit von 50 km/h bei Schneefall und einer schneebedeckten Fahrbahn und schlechter Sicht. Wie im unteren Bild auf Fig. 9 dargestellt, fährt der vorausfahrende PKW 2 anschließend in eine Ebene ein. Aufgrund der Einfahrt des vorausfahrenden PKWs 2 in eine Ebene verbessert sich dessen Bremsverzögerungsvermögen durch Wegfall der Hangabtriebskraft, so dass der Sicherheitsabstand vom nachfolgenden LKW 1, der sich noch auf dem Gefälle befindet, zu diesem PKW 2 vergrößert werden muss.

Im Schritt S800 wird das Passgefälle der aktuellen Fahrbahn 5 ermittelt. Das Passgefälle wurde aus den dreidimensionalen Straßenbahnkurven 112 und/ oder aus den dreidimensionalen Bahnkurven 110, 111 des Fahrzeugs 1 bzw. des Fremdfahrzeugs 2 ermittelt. Im Schritt S801 wird der aktuelle Sicherheitsabstand auf Passabfahrt geregelt unter Berücksichtigung der Bremsverzögerungsvermögen des Fahrzeugs 1 und des Fremdfahrzeugs 2, die wie zuvor anhand der verschiedenen Funktionsgrößen 103 bis 112 ermittelt wurden. In Schritt S802 wird ein Ende des Gefälles durch Horizontverschiebung und Objektveränderung erkannt. Die Hecksilhouette und die sichtbarer Fahrzeugfront ergeben aus Sicht des LKWs 1 eine größere Objekthöhe 7.

In Schritt S803 bremst die Fahrzeug-Längsregelung den LKW 1 so lange ab, bis der Abstand zum vorausfahrenden PKW 2 entsprechend dem verlängerten Bremsweg aufgrund der bekannten Hangabtriebskraft angepasst ist. In Schritt S804 erfolgt eine Neuanpassung des Sicherheitsabstandes nach dem Einfahren des LKWs 1 in die Ebene.

Die einzelnen Merkmale der Erfindung sind selbstverständlich nicht auf die beschriebenen Kombinationen von Merkmalen im Rahmen der vorgestellten Ausführungsbeispiele beschränkt und können in Abhängigkeit vorhandener Fahrzeugsensorik auch in anderen Kombinationen eingesetzt werden. Dies trifft insbesondere auf die Kombinationen der in Fig. 1 dargestellten Funktionsgrößen zu, die unterschiedlich kombiniert werden können. So ist es vorteilhaft, aber nicht unbedingt notwendig, neben dem sich ändernden Einfallswinkel weitere der in Fig. 1 gezeigten Funktionsgrößen zur Fahrzeuglängsregelung zu verwenden. Je nach gewählter Ausführungsform werden dann für die ermittelten Funktionsgrößen im Fahrerassistenzsystem 100 die entsprechenden angepassten Regelungstabellen hinterlegt. Ferner können selbstverständlich nach Bedarf und erforderlicher Genauigkeit die Anzahl der verwendeten Klassen für die einzelnen Parameter, wie Fahrzeugklasse, Fahrbahnzustandsklasse, Fahrbahnreibwertklasse etc. angepasst werden.

*****

**Bezugszeichenliste**

| | |
|---|---|
| 1 | Fahrzeug |
| 2 | Fremdfahrzeug |
| 3 | Fahrtrichtung |
| 4A | Sportwagensilhouette |
| 4B | PKW-Silhouette |
| 4C | Motorrad-Silhouette |
| 4D | SUV-Silhouette |
| 4F | kleiner LKW- oder Stadtbus-Silhouette |
| 4G | LKW- oder Reisebus-Silhouette |
| 5 | Fahrbahn |
| 5A | Fahrbahn mit Steigung |
| 5B | Fahrbahn mit Gefälle |
| 6 | Radarstrahl |
| 6A | Radarsensor |
| 7 | Höhe Hecksilhouette |
| 100 | Fahrerassistenzsystem zur Fahrzeug-Längsregelung |
| 101 | Sensoren und Daten |
| 102 | Datenverbindung |
| 103 | Geschwindigkeit |
| 104 | kürzester Abstand zum Fremdfahrzeug |
| 105 | Einfallswinkel |
| 106 | Fahrzeugparameter |
| 107 | aktueller Fahrbahnzustand |
| 108 | aktueller Fahrbahnreibwert |
| 109 | Fahrzeugklasse Fremdfahrzeug |
| 110 | 3D-Bahnkurve Fahrzeug |
| 111 | 3D-Bahnkurve Fremdfahrzeug |
| 112 | Straßentyp und 3D-Bahnkurve Fahrbahn |
| 113 | Datenleitung |
| 114 | Reglereinheit |
| 115 | Steuerleitung |
| 116 | Bremsanlage |
| 200 | Tabelle mit fahrbahnspezifischen und fahrzeugspezifischen Bremsverzögerungsvermögen |

**Patentansprüche**

1. Betriebsverfahren für ein Fahrerassistenzsystem (100) zur Fahrzeug-Längsregelung eines Fahrzeugs (1) bezüglich eines Fremdfahrzeugs (2), vorzugsweise zur Geschwindigkeits- und/oder Abstandsregelung, wobei ein sich verändernder Einfallswinkel (105) des sich seitlich oder seitlich von hinten annähernden Fremdfahrzeugs (2) in die Fahrzeug-Längsregelung einfließt, wobei der Einfallswinkel (105) der Winkel zwischen Fahrtrichtung des Fahrzeugs (1) und dem Abstandsvektor zum Fremdfahrzeug (2) ist, umfassend die Schritte:

    - Ermitteln einer Bahnkurve (111) des Fremdfahrzeugs (2) in Abhängigkeit eines gemessenen Abstands und des sich verändernden Einfallswinkels (105) des Fremdfahrzeugs (2);
    - Ermitteln einer Bahnkurve (110) des Fahrzeugs (1);
    - Bestimmen, in Abhängigkeit der ermittelten Bahnkurven (110, 111), ob eine Zeitdauer oder ein Abstand bis zur einer möglichen seitlichen Kollision zwischen dem Fahrzeug (1) und dem Fremdfahrzeug (2) einen vorbestimmten Schwellwert unterschritten hat,

    **dadurch gekennzeichnet, dass** falls die Zeitdauer oder der Abstand den vorbestimmten Schwellwert unterschritten hat und/oder falls der seitliche Einfallswinkel (105) in einem vorbestimmten Bereich liegt, das Verfahren die folgenden Schritte umfasst:

    - Ausgeben eines Warnsignals an den Fahrer;
    - Bestimmen, ob der Fahrer während einer Reaktionsphase ein Ausweichmanöver ausführt, falls der Fahrer während der Reaktionsphase kein Ausweichmanöver ausführt, Ausführen der Fahrzeug-Längsregelung bis ein Sicherheitsabstand zum Fremdfahrzeug (2) erreicht ist, und
    - Berechnen einer Relativgeschwindigkeit des sich seitlich oder seitlich von hinten annähernden Fremdfahrzeugs (2) aus einer zeitlichen Änderung eines Abstandes zwischen Fahrzeug (1) und Fremdfahrzeug (2) und einer Änderung des Einfallswinkels (105), wobei die Fahrzeug-Längsregelung, nachdem der Fahrer während der Reaktionsphase kein Ausweichmanöver ausgeführt hat, nur ausgeführt wird, falls die Relativgeschwindigkeit einen vorbestimmten Schwellschwert unterschreitet.

2. Betriebsverfahren nach Anspruch 1, wobei das Ausweichmanöver daran erkannt wird, ob der Fahrer einen Lenkvorgang, einen Bremsvorgang, eine Geschwindigkeitsänderung und/oder eine Änderung des Fahrpedals ausführt.

3. Betriebsverfahren nach einem der vorhergehenden Ansprüche, wobei eine Länge der Reaktionsphase für den Fahrer in Abhängigkeit der bestimmten Zeitdauer oder des bestimmten Abstands bis zur einer möglichen seitlichen Kollision bestimmt wird.

4. Betriebsverfahren nach einem der vorhergehenden Ansprüche, weiter umfassend die Schritte:
Erfassen eines aktuellen Fahrbahnzustands (107) und/ oder eines aktuellen Fahrbahnreibwerts (108), wobei die Bestimmung eines Sicherheitsabstandes der Längsregelung und/ oder der Zeitdauer oder des Abstands bis zur einer möglichen seitlichen Kollision in Abhängigkeit von dem erfassten aktuellen Fahrbahnzustand (107) und/ oder des aktuellen Fahrbahnreibwerts (108) erfolgt.

5. Betriebsverfahren nach einem der vorhergehenden Ansprüche, weiter umfassend die Schritte:
Bestimmung der Fahrzeugklasse (109) des sich schräg von hinten annähernden Fremdfahrzeugs (2), wobei die Bestimmung eines Sicherheitsabstandes der Längsregelung und/ oder der Zeitdauer oder des Abstands bis zur einer möglichen seitlichen Kollision in Abhängigkeit von der bestimmten Fahrzeugklasse (109) erfolgt.

6. Betriebsverfahren nach Anspruch 5, wobei die Fahrzeugklasse (109) des sich schräg von hinten annähernden Fremdfahrzeugs (2) in Abhängigkeit des ermittelnden Abstands und Höhe des Fremdfahrzeugs (2) ermittelt werden.

7. Betriebsverfahren nach Anspruch 6, wobei die Fahrzeugklasse (109) des sich schräg von hinten annähernden Fremdfahrzeugs (2) in Abhängigkeit der seitlichen Silhouette und Fahrzeuglänge ermittelt werden.

8. Betriebsverfahren nach einem der vorhergehenden Ansprüche, wobei beim Ermitteln der Bahnkurven (110, 111) des Fahrzeugs (1) und des sich schräg von hinten annähernden Fremdfahrzeugs (2) jeweils die 3-dimensionalen voraussichtliche Bahnkurven (110, 111) bestimmt werden.

9. Betriebsverfahren nach einem der vorhergehenden Ansprüche, weiter umfassend die Schritte: Ermitteln des Straßentyps und/ oder einer 3-dimensionalen Bahnkurve (112) der Straße, wobei die Bestimmung eines Sicherheitsabstandes der Längsregelung und/ oder einer Zeitdauer oder des Abstands bis zur einer möglichen seitlichen Kollision in Abhängigkeit von dem bestimmten Straßentyp und/ oder der 3-dimensionalen Bahnkurve (112) der Straße erfolgt.

10. Betriebsverfahren nach einem der vorhergehenden Ansprüche, weiter umfassend die Schritte: Bestimmen zumindest eines Fahrzeugbeladungszustands, eines Zustands der Fahrzeugbremsanlage und/oder eines Reifenzustands des Fahrzeugs, wobei zumindest einer dieser Parameter in die Längsregelung einfließt.

11. Fahrerassistenzsystem (100) zur Fahrzeug-Längsregelung eines Fahrzeugs (1) bezüglich eines Fremdfahrzeugs (2), vorzugsweise zur Geschwindigkeits- und/oder Abstandsregelung, wobei das Fahrerassistenzsystem (100) zur Durchführung des Betriebsverfahrens nach einem der vorhergehenden Ansprüche eingerichtet ist, wobei das Fahrerassistenzsystem (100) Folgendes umfasst:

- eine Bereitstellungseinrichtung (105), die zum Bereitstellen eines sich ändernden Einfallswinkels des sich seitlich oder von schräg hinten annähernden Fremdfahrzeugs (2) ausgeführt ist; und
- eine Regelungseinrichtung (114), die zum Durchführen der Fahrzeug-Längsregelung in Abhängigkeit von dem zumindest sich ändernden Einfallswinkels ausgeführt ist.

12. Nutzfahrzeug, vorzugsweise Lastwagen oder Omnibus, mit einem Fahrerassistenzsystem (100) nach Anspruch 11.

**Claims**

1. Operating method for a driver assistance system (100) for vehicle longitudinal control of a vehicle (1) with respect to a third-party vehicle (2), preferably for speed and/or distance control, wherein a changing angle of incidence (105) of the third-party vehicle (2) approaching laterally or from the rear is used when performing the vehicle longitudinal control, wherein the angle of incidence (105) is the angle between the direction of travel of the vehicle (1) and the distance vector to the third-party vehicle (2), comprising the steps:

- Determining a trajectory (111) of the third-party vehicle (2) dependent on a measured distance and the changing angle of incidence (105) of the third-party vehicle (2);
- Determining a trajectory (110) of the vehicle (1);
- Determining, dependent on the determined trajectory curves (110, 111), whether a duration of time or a distance until a possible lateral collision between the vehicle (1) and the third-party vehicle (2) has fallen below a predetermined threshold value;

**characterised in that**, if the duration of time or the distance has fallen below the predetermined threshold value and/or if the lateral angle of incidence (105) is within a predetermined range, the method comprises the following steps:

- Output of a warning signal to the driver;
- Determining whether the driver configures an evasive manoeuvre during a reaction phase, if the driver does not configure an evasive manoeuvre during the reaction phase, executing longitudinal vehicle control until a safe distance to the third-party vehicle (2) is reached, and
- Calculation of a relative speed of the third-party vehicle (2) approaching laterally or from behind from a change over time in a distance between the vehicle (1) and the third-party vehicle (2) and a change in the angle of incidence (105), wherein the longitudinal vehicle control is performed only if, after the driver has not carried out an evasive manoeuvre during the reaction phase, the relative speed falls below a predetermined threshold value.

2. The operating method according to claim 1, wherein the evasive manoeuvre is detected by whether the driver configures a steering manoeuvre, a braking manoeuvre, a change in speed and/or a change in the accelerator pedal.

3. An operating method according to any one of the preceding claims, wherein a length of the reaction phase for the driver is determined dependent on the determined time duration or the determined distance until a possible lateral collision.

4. An operating method according to any one of the preceding claims, further comprising the steps of:
Detecting a current roadway condition (107) and/or a current roadway friction coefficient (108), wherein the determination of a safety distance of the longitudinal control and/or the time duration or the distance until a possible lateral collision takes place dependent on the detected current roadway condition (107) and/or the current roadway friction coefficient (108).

5. An operating method according to any one of the preceding claims, further comprising the steps of: Determination of the vehicle class (109) of the third-party vehicle (2) approaching obliquely from behind, wherein the determination of a safety distance of the longitudinal control and/or the time duration or the distance until a possible lateral collision is dependent on the determined vehicle class (109).

6. Operating method according to claim 5, wherein the vehicle class (109) of the third-party vehicle (2) approaching obliquely from behind is determined as a function of the distance and height of the third-party vehicle (2) to be determined.

7. The operating method according to claim 6, wherein the vehicle class (109) of the third-party vehicle (2) approaching obliquely from behind is determined as a function of the lateral silhouette and vehicle length.

8. Operating method according to one of the preceding claims, wherein when determining the trajectories (110, 111) of the vehicle (1) and of the third-party vehicle (2) approaching obliquely from behind, the 3-dimensional predicted trajectories (110, 111) are determined in each case.

9. Operating method according to one of the preceding claims, further comprising the steps of: determining the road type and/or a 3-dimensional trajectory curve (112) of the road, wherein the determination of a safety distance of the longitudinal control and/or a time duration or the distance until a possible lateral collision takes place dependent on the determined road type and/or the 3-dimensional trajectory curve (112) of the road.

10. An operating method according to any one of the preceding claims, further comprising the steps of: Determining at least one of a vehicle load condition, a vehicle brake system condition and/or a tyre condition of the vehicle, wherein at least one of these parameters is included in the longitudinal control.

11. Driver assistance system (100) for vehicle longitudinal control of a vehicle (1) with respect to a third-party vehicle (2), preferably for speed and/or distance control, wherein the driver assistance system (100) is configured to carry out the operating method according to one of the preceding claims, wherein the driver assistance system (100) comprises the following:

- a providing device (105) configured to provide a changing angle of incidence of the third-party vehicle (2) approaching laterally or from obliquely behind; and
- a control device (114) configured to perform vehicle longitudinal control dependent on the at least changing angle of incidence.

12. Utility vehicle, preferably lorry or bus, with a driver assistance system (100) according to claim 11.

**Revendications**

1. Procédé de fonctionnement pour un système d'assistance au conducteur (100) pour la régulation longitudinale de véhicule d'un véhicule (1) par rapport à un véhicule tiers (2), de préférence pour la régulation de la vitesse et/ou de la distance, dans lequel un angle d'incidence (105) variable du véhicule tiers (2) s'approchant latéralement par l'arrière entre dans la régulation longitudinale de véhicule, dans lequel l'angle d'incidence (105) est l'angle entre le sens de la marche du véhicule (1) et le vecteur de distance par rapport au véhicule tiers (2), comprenant les étapes consistant à :

- établir une trajectoire (111) du véhicule tiers (2) en fonction d'une distance mesurée et de l'angle d'incidence (105) du véhicule tiers (2) variable ;
- établir une trajectoire (110) du véhicule (1) ; et
- déterminer, en fonction des trajectoires établies (110, 111), si un délai ou une distance jusqu'à une collision latérale possible entre le véhicule (1) et le véhicule tiers (2) est devenu(e) inférieur(e) à une valeur seuil prédéterminée ; **caractérisé en ce que**, si le délai ou la distance est devenu(e) inférieur(e) à la valeur seuil prédéterminée et/ou si l'angle d'incidence latéral (105) se trouve dans une plage prédéterminée, le procédé comprend les étapes suivantes:

sortir un signal d'avertissement destiné au conducteur ;

déterminer si le conducteur effectue une manœuvre d'évitement pendant une phase de réaction, et si le conducteur n'effectue aucune manœuvre d'évitement pendant la phase de réaction, effectuer la régulation longitudinale de véhicule jusqu'à ce qu'une distance de sécurité par rapport au véhicule tiers (2) soit atteinte, et

calculer une vitesse relative du véhicule tiers (2) s'approchant latéralement ou latéralement par l'arrière à partir d'un changement temporel d'une distance entre le véhicule (1) et le véhicule tiers (2) et d'un changement de l'angle d'incidence (105) ;

dans lequel, après que le conducteur n'a effectué aucune manœuvre d'évitement pendant la phase de réaction, la régulation longitudinale de véhicule n'est effectuée que si la vitesse relative devient inférieure à une valeur seuil prédéterminée.

2. Procédé de fonctionnement selon la revendication 1, dans lequel la manœuvre d'évitement est reconnue en ce que le conducteur effectue une opération de braquage, une opération de freinage, un changement de vitesse et/ou un changement de pédale d'accélérateur.

3. Procédé de fonctionnement selon l'une quelconque des revendications précédentes, dans lequel une longueur de la phase de réaction pour le conducteur est déterminée en fonction du délai déterminé ou de la distance déterminée jusqu'à une collision latérale possible.

4. Procédé de fonctionnement selon l'une quelconque des revendications précédentes, comprenant en outre l'étape consistant à :
détecter un état actuel de la chaussée (107) et/ou un coefficient de frottement actuel de la chaussée (108), dans lequel la détermination d'une distance de sécurité de la régulation longitudinale et/ou du délai ou de la distance jusqu'à une collision latérale possible est effectuée en fonction de l'état actuel de la chaussée (107) et/ou du coefficient de frottement actuel de la chaussée (108) détecté(s).

5. Procédé de fonctionnement selon l'une quelconque des revendications précédentes, comprenant en outre l'étape consistant à :
déterminer la catégorie de véhicule (109) du véhicule tiers (2) s'approchant obliquement par l'arrière, dans lequel la détermination d'une distance de sécurité de la régulation longitudinale et/ou du délai ou de la distance jusqu'à une collision latérale possible est effectuée en fonction de la catégorie de véhicule (109) déterminée.

6. Procédé de fonctionnement selon la revendication 5, dans lequel la catégorie de véhicule (109) du véhicule tiers (2) s'approchant obliquement par l'arrière est établie en fonction de la distance et de la hauteur du véhicule tiers (2) établies.

7. Procédé de fonctionnement selon la revendication 6, dans lequel la catégorie de véhicule (109) du véhicule tiers (2) s'approchant obliquement par l'arrière est établie en fonction de la silhouette latérale et de la longueur de véhicule.

8. Procédé de fonctionnement selon l'une quelconque des revendications précédentes, dans lequel lors de l'établissement des trajectoires (110, 111) du véhicule (1) et du véhicule tiers (2) s'approchant obliquement par l'arrière, respectivement les trajectoires (110, 111) prévisionnelles tridimensionnelles sont déterminées.

9. Procédé de fonctionnement selon l'une quelconque des revendications précédentes, comprenant en outre l'étape consistant à : établir le type de route et/ou une trajectoire tridimensionnelle (112) de la route, dans lequel la détermination d'une distance de sécurité de la régulation longitudinale et/ou d'un délai ou de la distance jusqu'à une collision latérale possible est effectuée en fonction du type de route et/ou de la trajectoire tridimensionnelle (112) déterminé(s) de la route.

10. Procédé de fonctionnement selon l'une quelconque des revendications précédentes, comprenant en outre l'étape consistant à : déterminer au moins un état de charge du véhicule, un état du système de frein du véhicule et/ou un état des pneus du véhicule, dans lequel au moins l'un de ces paramètres entre dans la régulation longitudinale.

11. Système d'assistance au conducteur (100) pour la régulation longitudinale de véhicule d'un véhicule (1) par rapport à un véhicule tiers (2), de préférence pour la régulation de vitesse et/ou de distance, le système d'assistance au conducteur étant conçu pour effectuer le procédé de fonctionnement selon l'une quelconque des revendications précédentes, le système d'assistance au conducteur (100) comprenant :

- un dispositif de fourniture (105) qui est réalisé pour fournir un angle d'incidence variable du véhicule tiers (2) s'approchant obliquement par l'arrière ; et
- un dispositif de régulation (114) qui est réalisé pour effectuer la régulation longitudinale de véhicule en fonction dudit au moins un angle d'incidence variable.

12. Véhicule utilitaire, de préférence poids lourd ou bus, comprenant un système d'assistance au conducteur (100) selon la revendication 11.

Fig. 1

| Sensoren & Daten | 101 |
| --- |
| Raddrehzahl |
| Federungs-geschw... |
| Aussentemp. |
| Reifentemp. |
| Achslast |
| GPS-Daten |
| Navigationsdaten |
| Lasersensorik |
| Radarsensorik |
| Neigungssensor |
| Ultraschallsensor |
| Kamerasensor |
| weitere Sensoren, Sensorgrößen |

102

100

103 Geschwindigkeit
104 Abstand
105 Einfallswinkel
106 Fahrzeugparameter
107 Aktueller Fahrbahnzustand
108 Aktueller Fahrbahnreibwert
109 Fahrzeugklasse Fremdfahrzeug
110 3D-Bahnkurve Fahrzeug
111 3D-Bahnkurve Fremdfahrzeug
112 Typ & 3D-Bahnkurve Fahrbahn

113

114

115

116

## Fig. 2

| vorausfahrendes Fremdfahrzeug | Fzg.-Klasse | 1 | 2 | 3 | 4 | 4 | 5 | 6 | 7 |
|---|---|---|---|---|---|---|---|---|---|
| | typ. Fahrzeug | Lkw-40 t/ Reisebus-hoch | Pkw | Pkw mit Caravan | SUV | Transporter | Lkw-12/ 24 t, Bus | Sportwagen | Motorrad |
| Silhouette | Höhe, von..bis [dm] | 35..40 | 14..15 | 20..26 | 16..18 | 20..31 | 22..28 | 11..14 | 13..18 |
| | Breite, von..bis [dm] | 23-25 | 16..19 | 18..25 | 18..20 | 18..20 | 22..25 | 17..20 | 6..10 |
| | Höhe : Breite, von..bis | 1,52..1,6 | 0,79..0,87 | 1,04..1,11 | 0,88..0,9 | 1,11..1,55 | 1..1,17 | 0,56..0,76 | 1,4..2,5 |
| typische Verzögerung [g] (bei typischer bzw. fahrbarer Geschwindigkeit, ABS, geeigneter Bereifung, mittlerer Zuladung, Fahrbahn gut - mitel - schlecht) | | | | | | | | | |
| Fahrbahn Reibwert-Klassen µF | 1: >0,8 (trocken) | 0,62/0,58/0,55 | 0,95/0,85/0,8 | 0,7/0,55/0,45 | 0,85/0,8/0,75 | 0,8/0,75/0,7 | 0,68/0,65/0,62 | 1,05/0,95/0,8 | 1,1/0,9/0,7 |
| | 2: >0,5..0,8 (nass, kein steh. Wasser) | 0,58/0,54/0,5 | 0,75/0,65/0,55 | 0,55/0,45/0,35 | 0,72/0,62/0,55 | 0,7/0,65/0,58 | 0,6/0,56/0,54 | 0,8/0,7/0,55 | 0,75/0,55/0,4 |
| | 3: 0,20..0,5 (steh. Wasser, griffig. Schnee) | 0,48/0,45/0,4 | 0,5/0,45/0,35 | 0,3/0,2/0,1 | 0,5/0,4/0,3 | 0,5/0,48/0,42 | 0,49/0,47/0,42 | 0,4/0,3/0,2 | 0,35/0,22/0,12 |
| | 4: < 0,20 (glatter schnee, Eis) | 0,20/0,19/0,18 | 0,2/0,18/0,16 | --- | 0,2/0,18/0,14 | 0,2/0,2/0,19 | 0,2/0,19/0,18 | 0,11/0,08/0,06 | --- |
| Fahrbahngüte: Ebenheit, Bodenwellen, Ausbesserungen | gut | x | x | | | | | x | x |
| | mittel | | | x | | x | x | | |
| | schlecht | | | | x | | | | |
| Fzg.-Geschwindigkeit [km/h] | | < 95/125 | >130 | <95 | >130 | <95 | <95 | > 130 | > 130 |
| folgendes Fahrzeug (Beispiele) | | Pkw | Sportwagen | Transporter | Pkw | Lkw-40 t | Pkw | Lkw-40 t | Bus |
| Beispiele (als mögliche Ist-Zustände und angenommener Fahrbahngüten, siehe "x") | | | | | | | | | |
| Reifentyp | Sommer, Winter, etc | Ganzjahres | S=Sommer, W=Winter | S=Sommer, W=Winter | S=Sommer, W=Winter | S=Sommer, W=Winter | S=Sommer, W=Winter | Ganzjahres | S=Sommer, W=Winter |
| Profilzustand | in Prozent vom Neuzustand | 50 | S=75, W=40 | S=30, W=90 | S=35, W=80 | S=80, W=80 | S=90, W=80 | 50 | S=80, W=80 |
| Beladung | in Prozent oder Personen | 4 Personen | 2 Personen | 1 Person | 3 Personen | 100% | 100% | 100% | 70% |
| Zustand Bremsanlage | Art (Scheibe/ Trommel), Temperatur, Beläge -> Faktor 0,6...1 | 1 | 1 | 1 | 1 | 1 | 1 | 0,85 | 1 |
| mögliche Verzögerung [g] | für µF_1 | 0,92 | S=1,05 | S=0,78 | S=0,69 | S=0,58 | S=0,74 | 0,51 | S=0,68 |
| | für µF_2 | 0,7 | S=0,8 | S=0,64 | S=0,54 | S=0,54 | S=0,58 | 0,44 | S=0,6 |
| | für µF_3 | 0,46 | S=0,39 | W=0,47 | W=0,35 | W=0,45 | W=0,36 | 0,34 | W=0,49 |
| | für µF_4 | 0,2 | W=0,09 | W=0,2 | W=0,16 | W=0,19 | W=0,17 | 0,1 | --- |

200

Fig. 3

## Fig. 4

| | |
|---|---|
| Erfasse Fremdfahrzeug | S400 |
| ↓ | |
| Kürzester Abstand | S401 |
| ↓ | |
| Fahrzeugklasse | S402 |
| ↓ | |
| Einfallswinkel | S403 |
| ↓ | |
| eigene Geschwindigkeit | S404 |
| ↓ | |
| 3D-Bahnkurve eigenes Fahrzeug | S405 |
| ↓ | |
| Typ & Bahnkurve Strasse | S406 |
| ↓ | |
| Fahrbahnzustand | S407 |
| ↓ | |
| Fahrbahnreibwertklasse | S408 |
| ↓ | |
| eigene Bremsverzögerung | S409 |
| ↓ | |
| Bremsverzögerung Fremdfahrzeug | S410 |
| ↓ | |
| Berechnen & Regeln Sicherheitsabstand | S411 |

Fig. 5A

Fig. 5B

# Fig. 6

Erfasse Fremdfahrzeug — S600

Kürzester Abstand — S601

Fahrzeugklasse — S602

Einfallswinkel — S603

eigene Geschwindigkeit — S604

3D-Bahnkurve Fahrzeug — S605

Typ & Bahnkurve Strasse — S606

Fahrbahnzustand — S607

Fahrbahnreibwertklasse — S608

3D-Bahnkurve Fremdfahrzeug — S609

S610

Nein — Kollision? — Ja

Fig. 6

| Ausgabe Warnsignal | S611 |

| Start Timer | S612 |

S613 — Reaktion Fahrer

JA     NEIN

S614

| Kein Reglereingriff | | Unterschreiten Mindestabstand? | S615 |

| Bremssteuerung | S616 |

| Erkenne Fahrzeugklasse | S617 |

| Sicherheitsabstand | S618 |

| Ende Reglereingriff | S619 |

# Fig. 6A

```
                    ┌──────────────────────────────────────┐         S611
                    │  Ausgabe Warnsignal                  │  ◄──────┐
                    └──────────────────────────────────────┘         │
                                      │                               │
                    ┌──────────────────────────────────────┐   S612  │
                    │  Start Timer                         │         │
                    └──────────────────────────────────────┘         │
                                      │                               │
                                 ╱ S613A ╲                            │
                         NEIN  ╱ Situation ╲  JA                      │
                         ◄─────╲ kritisch? ╱─────┐                    │
                                ╲         ╱       │                   │
  S614A                          ╲     ╱         │                   │
     ┌────────────────────┐                      │    S615A          │
     │  Kein Reglereingriff│               ╱ Einfalls- ╲   >         │
     └────────────────────┘          ┌────╲  winkel?  ╱─── Schwellwert ┘
                                      │     ╲         ╱
                               <      │
                          Schwellwert │
                    ┌──────────────────────────────┐   S616A
                    │  Ausgabe Warnsignal          │
                    └──────────────────────────────┘
                                      │
                    ┌──────────────────────────────┐   S617A
                    │  Start Timer                 │
                    └──────────────────────────────┘
                                      │
                    ┌──────────────────────────────┐   S618A
                    │  Leistungsbegrenzung         │
                    └──────────────────────────────┘
                                      │
                                 ╱ S619A ╲
                         NEIN  ╱ Situation ╲  JA
                         ◄─────╲ kritisch? ╱─────┐
                                ╲         ╱       │
  S620A                                           │      S621A
     ┌────────────────────┐                 NEIN ╱ Bremse? ╲ JA
     │  Kein Reglereingriff│            ┌────────╲         ╱────────┐
     └────────────────────┘            │         ╲       ╱         │
                                        │                          │
              S622A  ┌──────────────────────┐  S623A  ┌──────────────────────┐
                     │  Reglereingriff      │         │  Ausgabe Warnsignal  │
                     └──────────────────────┘         └──────────────────────┘
```

Fig. 7A

3

105

104

3

105

104

1

3

2

Fig. 7B

Bahn-Meter

Zeitachse

t1          t2

# Fig. 8

| | |
|---|---|
| Ermittlung Passgefälle | S800 |
| Regelung auf Passabfahrt | S801 |
| Erfassung Ende Gefälle | S802 |
| Regelung auf neuen Sicherheitsabstand | S803 |
| Regelung auf neuen Sicherheitsabstand in Ebene | S804 |

Fig. 9

**EP 4 273 010 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19750338 A1
- WO 98101 A1
- DE 102011108110 A1